# EUROPEAN PATENT SPECIFICATION

(11) **EP 1 158 404 B1**
(45) Date of publication and mention of the grant of the patent: **15.07.2009**
(21) Application number: 01304602.4
(22) Date of filing: 24.05.2001
(51) Int. Cl.: G06F 9/46, H04L 29/06, G06F 1/00

(54) **Server device and application communication system for proper communication of application divided into portions**
Servereinheit und Anwendungskommunikationssystem für ordnungsgemässe Kommunikation der geteilten Anwendung
Dispositif de serveur et système de transmission d'application pour la transmission appropriée de l'application divisée en parties

(30) Priority: 26.05.2000 JP 2000156750; 13.09.2000 JP 2000278155
(43) Date of publication of application: 28.11.2001
(73) Proprietor: Sharp Kabushiki Kaisha, Osaka 545-8522 (JP)
(72) Inventor: Shiomi, Masashi, Soraku-gun, Kyoto (JP); Nishiura, Yoshikazu, Nara-shi, Nara (JP); Ehiro, Masayuki, Izumi-shi, Osaka (JP); Tanimoto, Junichi, Ikoma-shi, Nara (JP); Morita, Teruaki, Kitakatsuragi-gun, Nara (JP)
(74) Representative: Brown, Kenneth Richard

(56) References cited:
- EP-A- 0 519 071
- EP-A- 0 866 612
- EP-A- 0 881 561
- EP-A- 0 926 584
- WO-A-01/53940
- WO-A-95/34857
- WO-A-97/25675
- WO-A-98/54672
- WO-A-99/46720
- US-A- 4 999 554
- US-A- 6 065 046

## Description

### BACKGROUND OF THE INVENTION

### Field of the Invention

The present invention relates to server devices, terminal devices, application communication systems, application communication methods and recording mediums for recording application communication programs. More particularly, the present invention relates to a server device, a terminal device, an application communication system and an application communication method for communicating an application divided into several portions through a data communication path, and a recording medium recording an application communication program for such communication.

### Description of the Background Art

In recent years, networks such as the Internet have become widespread rapidly. Corresponding thereto, various kinds of applications including game software and data of books in digital forms have increasingly been downloaded from server devices to client terminals through such networks.

A data distribution method generally in use attempts to reduce the burdens imposed on communication infrastructures as well as receiver sides by compressing the data to be communicated so as to reduce its capacity. However, in the case where an application to be distributed has a lot of capacity and just compressing thereof is insufficient, another distribution method as follows is usually employed.

In this distribution method, one application is divided into a plurality of units of, e.g., the capacity of floppy disk drive (FDD), and the application is distributed to a user in such units. The user receives and installs the units of application successively into his/her terminal device. When installation of all the units is completed, the units are combined and operated as one application.

For an unstable communication infrastructure such as a mobile terminal, a packet communication system is known as such a distribution method. The packet communication system attempts to suppress communication errors and reduce the traffic load by dividing the data to be distributed into units of packet. The data in these packets are combined on the terminal side, and utilized as one set of data (one application).

The application distribution system as described above, however, has a disadvantage that it takes a long period of time from the time when the communication is started till the time when the application is ready for use by the user.

More specifically, the user cannot operate the application until the entire application is completely installed or stored in a storage device. Especially, for communication of an application of a large volume, the user should wait for a very long period of time after he/she issues the send request until the desired application becomes ultimately available.

Thus, in the case where immediacy is required, i.e., when the user wants to execute an application such as game software as soon as possible, this method is extremely inconvenient.

In addition, an entire application should be received even if a user wants to use only a portion thereof, which is again inconvenient.

Further, in the case of mobile communication, the communication conditions depend on the topography during the communication, the distance from the base station and others, so that it is difficult to always keep a good communication condition. Thus, it has been extremely difficult to send or receive an application of a large capacity stably over a long period of time.

Accordingly, with the conventional distribution method requiring all the divided units corresponding to one application to be received completely before becoming available in the user terminal, the utilization of application itself has been difficult.

In addition, with the conventional distribution method, there has been a problem related to a method (charging method) of demanding payment of the price of the application. In the conventional distribution method, payment has been made on the premise that all the units of application are transferred completely. Thus, the user had to pay for the entire application even if he/she needed only a portion thereof.

EP 0866 612 B1 discloses an apparatus which can start execution of a program even when only part of a program is received.

### SUMMARY OF THE INVENTION

Based on the foregoing, an object of the present invention is to provide a server device, a terminal device, an application communication system, an application communication method and a computer readable recording medium recording an application communication program that enable utilization of a desired application in a short period of time after a start of communication thereof.

Another object of the present invention is to provide a server device, a terminal device, an application communication system, an application communication method and a computer readable recording medium recording an application communication program that can promote utilization of application communication.

The above objects of the present invention are achieved by a server device provided with the following elements. According to an aspect of the present invention, a server device includes: a first storage unit that stores an application divided into a plurality of portions, or sub-applications; a receiving unit that receives information from a user; and a sending unit that sends at least one of the sub-applications according to the received information. At least one of the sub-applications is executable alone.

The sub-applications have their order for execution, and an object of the application in its undivided form is achieved by executing the sub-applications in the order.

Accordingly, at least one of the sub-applications is sent to a user according to information received from the user. The sub-applications have their order for execution, and an object of the application before being divided can be achieved by executing the sub-applications in the order. At least one of the sub-applications can be executed alone.

Accordingly, the user who received the sub-application is allowed to execute the received sub-application even if the entire application is not received. Thus, a server device that allows utilization of a desired application in a short time period after the start of communication is provided.

The first storage unit stores the sub-applications by relating them with IDs (Identifications) for identification thereof.

Accordingly, the IDs related to the sub-applications for identification thereof are stored. This enables easy identification of each sub-application.

The sub-applications each include the ID of the sub-application that is to be utilized next.

Accordingly, the ID of the sub-application that is expected to be used next is included in each sub-application. Thus, the order for execution of the sub-applications is readily extracted.

At least one of the sub-applications includes the ID that identifies that it is the last sub-application.

Accordingly, the ID identifying that the sub-application is the last one is included in the sub-application. This allows notification of completion of execution of one application.

When the receiving unit receives the ID of a sub-application, the sending unit sends, based on the received ID, the relevant sub-application stored in the first storage unit.

Accordingly, when the ID of a sub-application is received from a user, the relevant sub-application is sent to the user. Thus, a desired sub-application can be sent to a user appropriately.

Here, the application refers to any kind of programs (contents) for execution of a certain process, which includes game software, continuous data of novel, movie, drama or music, and others. Although simple collection of data that are unrelated to each other is not included in the application of this definition, collection of data required for realization of a certain object is included therein.

Preferably, the sending unit sends the sub-application executable alone in the first place.

Preferably, the server device is further provided with a second storage unit that stores prescribed information for each sub-application.

Accordingly, prescribed information is stored for each sub-application, which can be utilized when necessary.

Preferably, the prescribed information includes the ID of each sub-application and price information corresponding thereto.

Accordingly, the application ID and the corresponding price information are stored. Thus, it becomes possible to know the price for each sub-application.

Preferably, the price information corresponding to a sub-application that is to be sent in the second or later place is lower than the price information corresponding to a sub-application that is being sent in the first place.

Accordingly, the sub-application to be sent in the second or later place is lower in price than the sub-application being sent in the first place. Thus, it is possible to give the user who received the sub-application sent in the first place an incentive to buy or utilize the following sub-application(s).

Preferably, the prescribed information includes the number of times of utilization of each sub-application.

Accordingly, the number of times of utilization of each sub-application is stored, and thus, it is possible to know how frequently each sub-application has been utilized.

Preferably, the server device is further provided with a fifth storage unit that stores information of a discount rate corresponding to the number of times of utilization.

Accordingly, the information of the discount rate corresponding to the number of times of utilization is stored, which can be utilized when necessary.

Preferably, the server device is further provided with a setting unit that sets the price of sub-application that is expected to be utilized next, based on the number of times of utilization of a prescribed sub-application that is stored in the second storage unit and the discount rate corresponding to the relevant number of times of utilization that is stored in the fifth storage unit.

Accordingly, the discount rate is determined according to the frequency of utilization of a prescribed sub-application, and the price of the sub-application to be used next is set based on the determined discount rate. Thus, it is possible to arouse the user's incentive to buy the next sub-application.

Preferably, the server device is further provided with a setting unit that sets the price of sub-application that is to be sent in the second or later place, based on the number of times of utilization of the sub-application sent in the first place that is stored in the second storage unit and the discount rate corresponding to the relevant number of times of utilization that is stored in the fifth storage unit.

Accordingly, the discount rate is determined according to the frequency of utilization of the sub-application sent in the first place, and the price of the sub-application being sent in the second or later place is set based on the determined discount rate. Accordingly, it is possible to stimulate the user's incentive to buy the sub-application(s) following the first sub-application.

Preferably, the prescribed information includes information about presence/absence of advertisement.

Accordingly, the information about presence/absence of advertisement is stored for each sub-application. Therefore, it is possible to know whether the advertisement is present/absent for a certain sub-application when necessary.

Preferably, when a sub-application for which the information about presence/absence of advertisement indicates that the advertisement exists is to be sent, the sending unit sends the sub-application with corresponding advertisement data attached thereto.

Accordingly, when there exists advertisement information for a sub-application, the relevant advertisement information is sent attached to the sub-application. Thus, it is possible to notify a user of desired advertisement information.

Preferably, the prescribed information includes an application name corresponding to the sub-application.

Accordingly, it is possible to readily know the application name of the sub-application.

Preferably, the server device is further provided with a third storage unit that stores user information.

Accordingly, the user information is stored, which can be utilized when necessary.

Preferably, the user information includes user ID and password for identification of a user.

Accordingly, the user ID and password are stored, which can be utilized when identifying the user.

Preferably, the server device is further provided with a first determination unit that determines, when the receiving unit receives user ID and password, whether the received user ID and password match the user ID and password stored in the third storage unit.

Accordingly, determination is made as to whether user ID and password received from a user match those stored. Thus, it is possible to identify whether the user is an authorized user.

Preferably, the server device is further provided with a prohibition unit that prohibits a sending operation of the sending unit when the first determination unit determines that the user IDs and passwords do not match.

Accordingly, the application sending operation is not performed when the user ID and password received from the user do not match those stored. Therefore, the application is sent exclusively to an authorized user, which improves reliability.

Preferably, the user information includes an application utilization history.

Accordingly, the history of utilization of application by a user is stored. Thus, it is possible to obtain appropriate information about the user from applications utilized in the past or the like.

Preferably, the server device is further provided with an extract unit that extracts appropriate advertisement data stored in the first storage unit based on the stored utilization history, and an advertisement data sending unit that sends the advertisement data extracted.

Accordingly, appropriate advertisement information is sent to a user based on the user's utilization history. Thus, the user is able to obtain appropriate information.

Preferably, the user information includes credit balance information of a user.

Accordingly, the credit balance information concerning payment made by the user is stored, and therefore, falsification of the credit balance by the user becomes impossible. The credit balance information can be retrieved when necessary.

Preferably, the server device is further provided with a comparison unit that compares the credit balance information of a user and the price information for a sub-application required by the user. According to the comparison result of the comparison unit, the sending unit sends the relevant sub-application only in the case where the credit balance information is greater than or equal to the price information.

Accordingly, the user receives the desired sub-application only when the credit balance of the user covers the price of the desired sub-application. Therefore, it is possible to apply financial brakes to the user.

Preferably, the server device is further provided with a fourth storage unit that stores prepayment information.

Accordingly, the prepayment information concerning payment made in advance is stored, which enables settlement by cable.

Preferably, the prepayment information includes prepaid ID and password.

Accordingly, the prepaid ID and password are stored, which can be utilized for verification of a prepaid card and the like.

Preferably, the server device is further provided with a second determination unit that determines, when the receiving unit receives prepaid ID and password, whether the received prepaid ID and password match the prepaid ID and password stored in the fourth storage unit.

Accordingly, it is possible to make a proper decision as to whether the received prepaid ID and password are correct.

Preferably, the prepayment information includes value information.

Accordingly, the value information of a medium such as a prepaid card is stored in the server device. Thus, tampering of the value information becomes impossible.

Preferably, the server device is further provided with a charging unit that charges a user a price of the sub-application every time the sending unit sends the sub-application to the user.

Accordingly, the user is charged on the basis of sub-application. Thus, the user is able to utilize a necessary application at a minimum price. Accordingly, it becomes possible to provide a server device that can promote utilization of application communication by allowing an appropriate price to be charged.

Preferably, the server device is further provided with a confirmation unit that confirms whether sending of the sub-application by the sending unit is completed. The charging unit charges for the sub-application when the confirmation unit confirms that the sending is completed.

Accordingly, the user is charged only when sending of the sub-application is completed. This avoids the situation where payment is demanded even though the communication was interrupted and ended incomplete.

According to an embodiment of the invention, every time the sub-application is sent to a user, the user who received the sub-application is charged for the sub-application. Thus, the user only needs to pay a minimum price. Accordingly, a server device that can promote utilization of application communication by allowing a reasonable price to be charged is provided.

According to an embodiment of the invention, the user is charged only when the sub-application is sent completely. Thus, the situation where payment is demanded even though the communication was interrupted and ended incomplete is avoided.

According to an embodiment of the invention, determination is made as to whether user ID and password input by a user match those stored. When they mismatch, the application sending operation is not performed. Thus, the application is sent only to an authorized user, thereby improving reliability.

According to an embodiment of the invention, a user is able to receive a desired sub-application only when the credit balance of the user covers the price of the relevant sub-application. Thus, it is possible to apply financial brakes to the user.

According to a further aspect of the present invention, a terminal device includes: a receiving unit that receives a sub-application as a portion of a divided application; an execution unit that executes the sub-application received; and a request unit that issues a send request for a next sub-application according to a result of execution by the execution unit, the next sub-application being identified based on information about the sub-application to be utilized next that is stored in the received sub-application. Wherein, if the sub-application is the last one, it is identified as the last one by the information about the sub-application to be utilized next.

Accordingly, a send request for a next sub-application is issued according to a result of execution of the sub-application, based on the information of sub-application to be utilized next that is stored in the executed sub-application. Thus, the sub-applications can be received in an appropriate order.

Preferably, when advertisement data corresponding to a sub-application is sent along with the sub-application, the receiving unit receives the advertisement data as well.

Accordingly, a user can receive, in addition to the desired application, interesting advertisement data related thereto.

Preferably, the terminal device is further provided with a sending unit that sends a reception complete signal when a receiving operation of sub-application of the receiving unit is completed.

Accordingly, a complete signal is sent upon completion of reception of the sub-application. Thus, whether the reception is completed or not can be notified appropriately.

According to an embodiment of the invention, the server device that received an application send request from the terminal sends the sub-application executable alone to the terminal. Thus, the terminal device can execute the sub-application immediately upon receipt thereof. Accordingly, an application communication system that allows utilization of a desired application in a short period of time after a start of communication can be provided.

According to an embodiment of the invention, a user is charged for each sub-application, so that the application can be utilized at a minimum price. Accordingly, an application communication system that can promote utilization of application communication by charging an appropriate price is provided.

According to a still further aspect of the present invention, an application communication method includes: a first storing step of storing an application divided into a plurality of sub-applications; a receiving step of receiving information from a user; and a sending step of sending at least one of the sub-applications according to the received information. At least one of the sub-applications can be executed alone.

The sub-applications have their order for execution, and an object of the application in its undivided form is achieved by executing the sub-applications in the order.

The first storing step stores the sub-applications by relating them with IDs for identification thereof.

The sub-applications each include the ID of the sub-application that is expected to be utilized next.

At least one of the sub-applications includes the ID that identifies that the relevant sub-application is the last one.

When the ID of a sub-application is received in the receiving step, the sending step sends, based on the received ID, the relevant sub-application stored in the first storing step.

Preferably, the sending step sends the sub-application executable alone in the first place.

Accordingly, it becomes possible to provide an application communication method that allows utilization of a desired application in a short period of time after a start of communication.

Preferably, the application communication method is further provided with a second storing step of storing prescribed information for each sub-application.

Preferably, the prescribed information includes the ID of the sub-application and price information corresponding thereto.

Preferably, the price information corresponding to the sub-application that is to be sent in the second or later place is lower than the price information corresponding to the sub-application that is being sent in the first place.

Preferably, the prescribed information includes the number of times of utilization of sub-application.

Preferably, the application communication method is further provided with a fifth storing step of storing information of a discount rate corresponding to the number of times of utilization.

Preferably, the application communication method is further provided with a setting step of setting a price of the sub-application that is to be sent next, based on the number of times of utilization of a prescribed sub-application that is stored in the second storing step and the discount rate corresponding to the relevant number of times of utilization that is stored in the fifth storing step.

Preferably, the application communication method is further provided with a setting step of setting a price of the sub-application that is to be sent in the second or later place, based on the number of times of utilization of the sub-application sent in the first place that is stored in the second storing step and the discount rate corresponding to the relevant number of times of utilization that is stored in the fifth storing step.

Preferably, the prescribed information includes information about presence/absence of advertisement.

Preferably, when a sub-application for which the information indicates the presence of the advertisement is to be sent, the sending step sends the relevant sub-application with corresponding advertisement data attached thereto.

Preferably, the prescribed information includes an application name corresponding to the sub-application.

Preferably, the application communication method is further provided with a third storing step of storing user information.

Preferably, the user information includes user ID and password for identification of a user.

Preferably, the application communication method is further provided with a first determining step of determining, when user ID and password are received in the receiving step, whether the received user ID and password match the user ID and password stored in the third storing step.

Preferably, the application communication method is further provided with a prohibiting step of prohibiting a sending operation by the sending step when mismatch of the user IDs and passwords is determined in the first determination step.

Preferably, the user information includes an application utilization history.

Preferably, the application communication method is further provided with an extracting step of extracting appropriate advertisement data stored in the first storing step based on the stored utilization history, and an advertisement data sending step of sending the extracted advertisement data.

Preferably, the user information includes credit balance information of a user.

Preferably, the application communication method is further provided with a comparing step of comparing the credit balance information of a user with price information of sub-application required by the user. As a result of comparison, if the credit balance information is greater than or equal to the price information, the sending step sends the sub-application.

Preferably, the application communication method is further provided with a fourth storing step of storing prepayment information.

Preferably, the prepayment information includes prepaid ID and password.

Preferably, the application communication method is further provided with a second determining step of determining, when prepaid ID and password are received in the receiving step, whether the received prepaid ID and password match the prepaid ID and password stored in the fourth storing step.

Preferably, the prepayment information includes value information.

Preferably, the application communication method is further provided with a charging step of charging a user a price of the sub-application every time the sub-application is sent to the user.

Preferably, the application communication method is further provided with a confirming step of confirming whether sending of the sub-application in the sending step is completed. The charging step charges for the sub-application when completion of the sending is confirmed by the confirming step.

According to an embodiment of the invention, it is possible to provide an application communication method that can promote utilization of application communication by allowing a reasonable price to be charged.

According to yet another aspect of the present invention, an application communication method includes: a receiving step of receiving a sub-application as a portion of a divided application; an executing step of executing the received sub-application; and a requesting step of issuing a send request for a next sub-application according to a result of execution by the executing step, based on the information of sub-application to be utilized next that is stored in the received sub-application, wherein if the sub-application is the last one, it is identified as the last one by the information of the sub-application to be utilized next.

Accordingly, as a result of execution of the sub-application, based on the information of sub-application to be used next that is stored in the executed sub-application, a send request for the next sub-application is issued. Therefore, an application communication method that can receive sub-applications in an appropriate order is realized.

Preferably, the application communication method is further provided with a sending step of sending a reception complete signal when a receiving operation of the sub-application in the receiving step is completed.

According to an embodiment of the invention, the server device which received an application send request from a terminal device sends a sub-application that is executable alone to the terminal device. The terminal device which received the sub-application can execute the sub-application immediately. Accordingly, it is possible to provide an application communication method that allows utilization of a desired application in a short period of time after a start of communication.

According to an embodiment of the invention, payment is demanded on the basis of sub-application, and thus, the application can be utilized at a minimum price. Accordingly, it is possible to provide an application communication method that can promote utilization of application communication by allowing an appropriate price to be charged.

According to yet another aspect of the present invention, a computer readable recording medium records an application communication program for causing a computer to execute an application communication method. The application communication method includes: a first storing step of storing an application divided into a plurality of sub-applications; a receiving step of receiving information from a user; and a sending step of sending at least one of the sub-applications according to the received information. At least one of the sub-applications can be executed alone.

The sub-applications have their order for execution, and an object of the application before being divided can be achieved by executing the sub-applications in the order.

The first storing step stores the sub-applications by relating them with IDs for identification thereof.

The sub-applications each include the ID of sub-application that is expected to be utilized next.

At least one of the sub-applications includes the ID that identifies that the relevant sub-application is the last one.

When the ID of sub-application is received in the receiving step, the sending step sends, based on the received ID, the relevant sub-application stored in the first storing step.

Preferably, the sending step sends the sub-application executable alone in the first place.

According to these inventions, it is possible to provide a recording medium recording an application communication program for causing a computer to execute an application communication method that allows utilization of a desired application in a short period of time after a start of communication.

Preferably, the application communication method is further provided with a second storing step of storing prescribed information for each sub-application.

Preferably, the prescribed information includes the ID of sub-application and price information corresponding thereto.

Preferably, the price information corresponding to the sub-application that is to be sent in the second or later place is lower than the price information corresponding to the sub-application that is being sent in the first place.

Preferably, the prescribed information includes the number of times of utilization of sub-application.

Preferably, the application communication method is further provided with a fifth storing step of storing information of a discount rate corresponding to the number of times of utilization.

Preferably, the application communication method is further provided with a setting step of setting a price of the sub-application that is to be sent next, based on the number of times of utilization of a prescribed sub-application that is stored in the second storing step and the discount rate corresponding to the relevant number of times of utilization that is stored in the fifth storing step.

Preferably, the application communication method is further provided with a setting step of setting a price of the sub-application that is to be sent in the second or later place, based on the number of times of utilization of the sub-application sent in the first place that is stored in the second storing step and the discount rate corresponding to the relevant number of times of utilization that is stored in the fifth storing step.

Preferably, the prescribed information includes information about presence/absence of advertisement.

Preferably, when a sub-application for which the information indicates the presence of the advertisement is to be sent, the sending step sends the relevant sub-application with corresponding advertisement data attached thereto.

Preferably, the prescribed information includes an application name corresponding to the sub-application.

Preferably, the application communication method is further provided with a third storing step of storing user information.

Preferably, the user information includes user ID and password for identification of a user.

Preferably, the application communication method is further provided with a first determining step of determining, when user ID and password are received in the receiving step, whether the received user ID and password match the user ID and password stored in the third storing step.

Preferably, the application communication method is further provided with a prohibiting step of prohibiting a sending operation by the sending step when mismatch of the user IDs and passwords is determined in the first determining step.

Preferably, the user information includes an application utilization history.

Preferably, the application communication method is further provided with an extracting step of extracting, based on the stored utilization history, appropriate advertisement data stored in the first storing step, and an advertisement data sending step of sending the extracted advertisement data.

Preferably, the user information includes credit balance information of a user.

Preferably, the application communication method is further provided with a comparing step of comparing the credit balance information of a user and the price information of sub-application required by the user. As a result of comparison by the comparing step, if the credit balance information is greater than or equal to the price information, the sending step sends the relevant sub-application to the user.

Preferably, the application communication method is further provided with a fourth storing step of storing prepayment information.

Preferably, the prepayment information includes prepaid ID and password.

Preferably, the application communication method is further provided with a second determining step of determining, when prepaid ID and password are received in the receiving step, whether the received prepaid ID and password match the prepaid ID and password stored in the fourth storing step.

Preferably, the prepayment information includes value information.

Preferably, the application communication method is further provided with a charging step of charging a user a price of the sub-application every time the sub-application is sent to the user.

Preferably, the application communication method is further provided with a confirming step of confirming whether sending of the sub-application in the sending step is completed. The charging step charges for the sub-application when completion of the sending is confirmed by the confirming step.

According to another aspect of the present invention, the application communication program is provided.

According to an embodiment of the invention, it is possible to provide a computer readable recording medium recording an application communication program for causing a computer to execute an application communication method that can promote utilization of application communication by allowing an appropriate price to be charged.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 illustrates a concept of an entire application communication system according to a first embodiment of the present invention.
Fig. 2 shows a detailed configuration of the server system in Fig. 1.
Figs. 3-6 show examples of data stored in the first, second, third and fourth storage units, respectively.
Fig. 7 is a block diagram showing a schematic configuration of the mobile terminal.
Fig. 8 is a flow chart illustrating an operation flow of the entire application communication system according to the first embodiment of the present invention.
Fig. 9 shows an example of a prepaid card to be purchased.
Fig. 10 is a flow chart illustrating a sub-routine for the prepaid card purchasing process (step S803) in Fig. 8.
Fig. 11 is a flow chart illustrating a sub-routine for the terminal authentication process (step S805) in Fig. 8.
Fig. 12 is a flow chart illustrating a sub-routine for the application select process (step S807) in Fig. 8.
Fig. 13 is a flow chart illustrating a sub-routine for the application sending and charging process (step S1207) in Fig. 12.
Fig. 14 is a flow chart illustrating a sub-routine for the prepayment process (step S1321) in Fig. 13.
Fig. 15 is a flow chart illustrating a sub-routine for the application execution process (step S809) in Fig. 8.
Fig. 16 shows a configuration of a golf game to be communicated.
Fig. 17 shows an example of data stored in the second storage unit according to a first modification of the first embodiment.
Fig. 18 shows an example of data stored in the fifth storage unit.
Fig. 19 shows an example of data stored in the second storage unit according to a second embodiment of the present invention.
Fig. 20 shows an example of data stored in the first storage unit of the second embodiment.
Fig. 21 is a flow chart illustrating the operation flow for the application sending and charging process (step S1207 in Fig. 12) according to the second embodiment.

### DESCRIPTION OF THE PREFERRED EMBODIMENTS

Hereinafter, embodiments of the present invention will be described with reference to the drawings.

### (1) First Embodiment

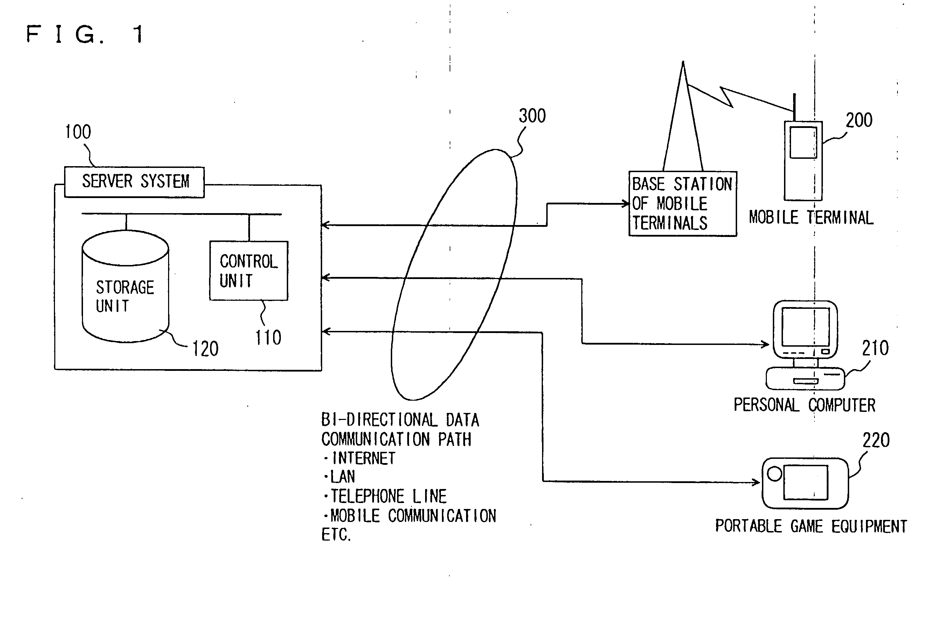

Referring to Fig. 1, the application communication system consists of a server system 100 and a plurality of terminal devices 200, 210 and 220 (hereinafter, also referred to as "terminals"). Server system 100 and terminal devices 200, 210 and 220 can communicate with each other through a data communication path 300.

Server system 100 includes: a storage unit 120 that stores information about an application divided into a plurality of portions, information about users (user information), information about advance payment (prepayment information) and others; and a control unit 110 that controls the entire server system 100. Throughout the specification, each of the portions of the divided application is referred to as a "sub-application".

Terminal device 200 is a mobile terminal that performs data communication through a base station for mobile terminals. Terminal device 210 is a personal computer. Terminal device 220 is portable game equipment.

Data communication path 300 allows communication in both directions, for which the Internet, LAN (Local Area Network), a telephone line, a mobile communication and others are utilized.

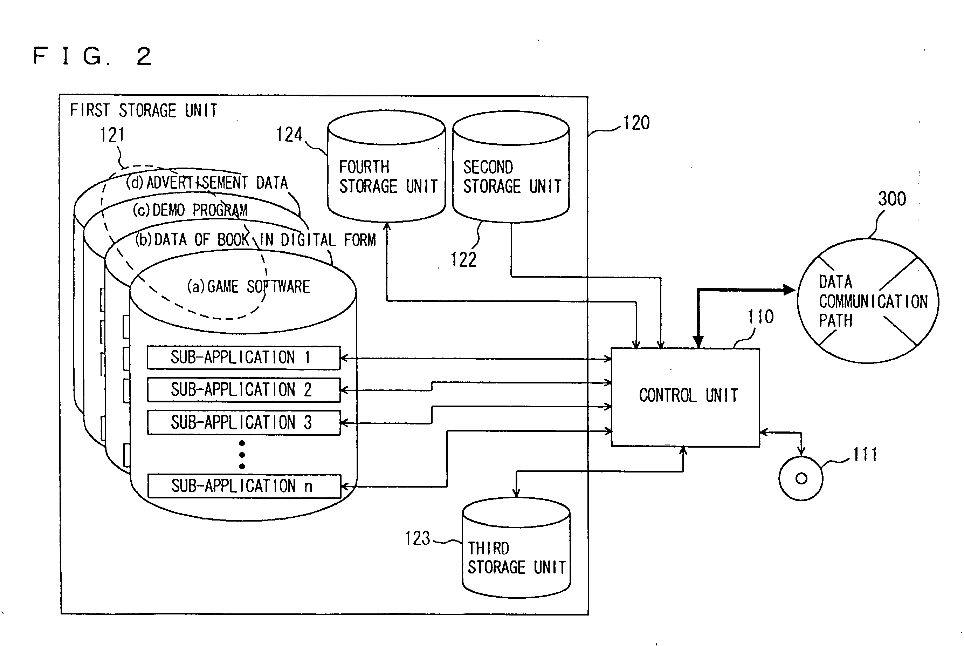

Now, server system 100 will be described with reference to Figs. 2-6.

Fig. 2 shows a detailed configuration of server system 100 in Fig. 1. Referring to Fig. 2, server system 100 includes control unit 110 and storage unit 120, as described above.

Storage unit 120 includes: a first storage unit 121 that stores applications each divided into sub-applications; a second storage unit 122 that stores information of the respective sub-applications; a third storage unit 123 that stores user information; and a fourth storage unit 124 that stores prepayment information.

First storage unit 121 stores a plurality of applications including game software (a), data of a book in a digital form (b), a demonstration (demo) program (c), advertisement data (d), and others. Each application is divided into minimum units according to its contents. For example, game software (a) is divided into n portions, or n sub-applications, according to the contents of the game. Communication of the application is performed in a unit of sub-application.

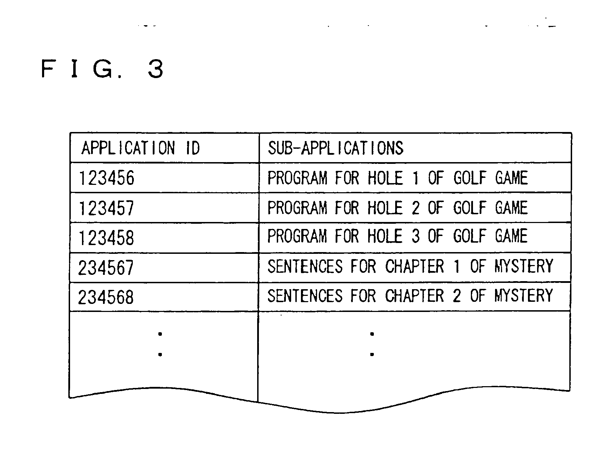

Fig. 3 shows exemplary data stored in first storage unit 121. Referring to Fig. 3, first storage unit 121 stores an application divided into a plurality of sub-applications, and application IDs for identification of the respective sub-applications.

For example, one application of golf game titled "Super Golf' is divided into several portions, such as "Program for Hole 1 of Golf Game", "Program for Hole 2 of Golf Game" and "Program for Hole 3 of Golf Game", which are stored as its sub-applications. These sub-applications are related to application IDs 123456, 123457 and 123458, respectively, which are also stored in first storage unit 121.

Each application ID contains information for classification including categories, e.g., game software, book data in a digital form, demo program, and advertisement data.

Here, each sub-application includes the application ID of sub-application that is supposed to be utilized next. For example, in "Program for Hole 1 of Golf Game", application ID (123457) of "Program for Hole 2 of Golf Game" that is expected to be used next is included.

If there is no sub-application that should be utilized next, the sub-application includes the application ID indicating that the relevant sub-application is the last sub-application.

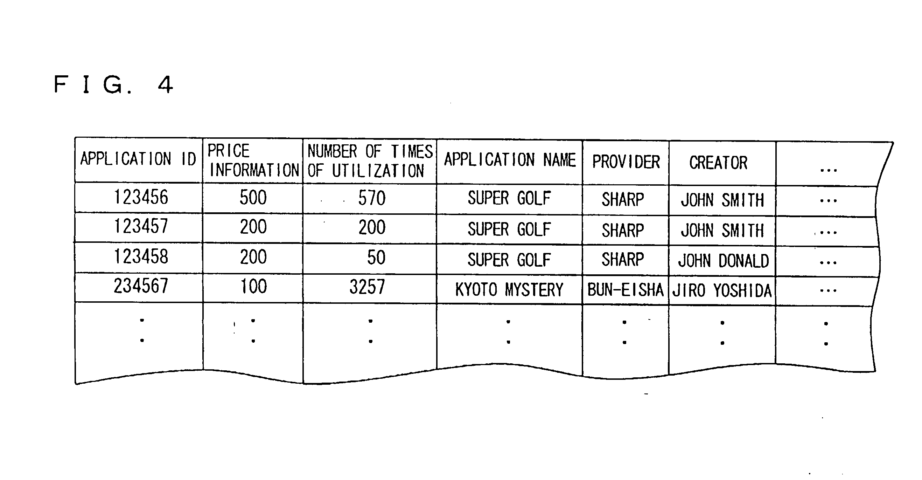

Second storage unit 122 stores information about the sub-applications. Fig. 4 shows exemplary data stored in second storage unit 122. Referring to Fig. 4, second storage unit 122 stores various kinds of information associated with respective sub-applications, which are related to corresponding application IDs. The information includes, e.g., price information, number of times of utilization, application name, names of provider and creator of each sub-application.

For example, stored for the sub-application of "Program for Hole 1 of Golf Game" (application ID = 123456) are: 500 yen as its price, 570 as the accumulated number of times of its utilization, "Super Golf' as the application name, "Sharp" as the name of provider, and "John Smith" as the name of creator, which are related to the application ID.

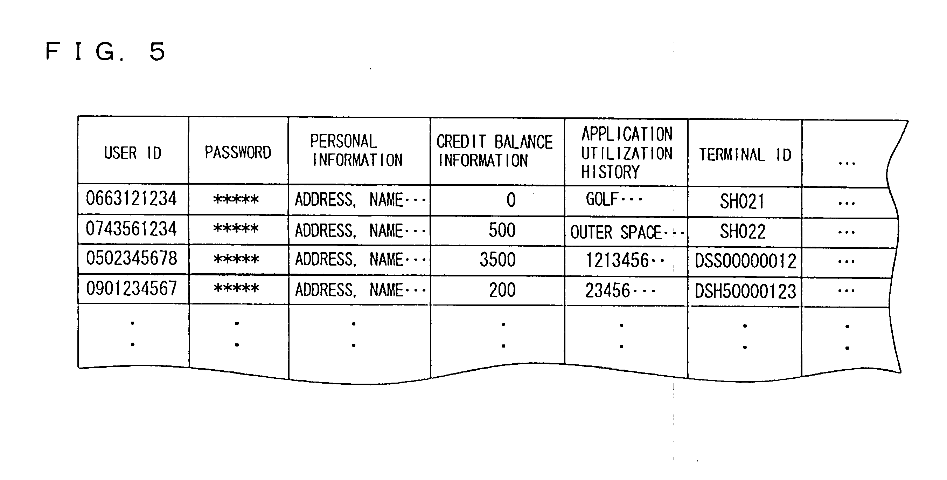

Third storage unit 123 stores personal information of users who utilize the application communication system. Fig. 5 shows exemplary data stored in third storage unit 123. Referring to Fig. 5, third storage unit 123 stores, for each user, personal information including his/her password, address, name, age and occupation, credit balance information of the user, application utilization history information indicating application(s) having been used by the user, terminal ID for identification of his/her terminal and others, which are related to the relevant user ID.

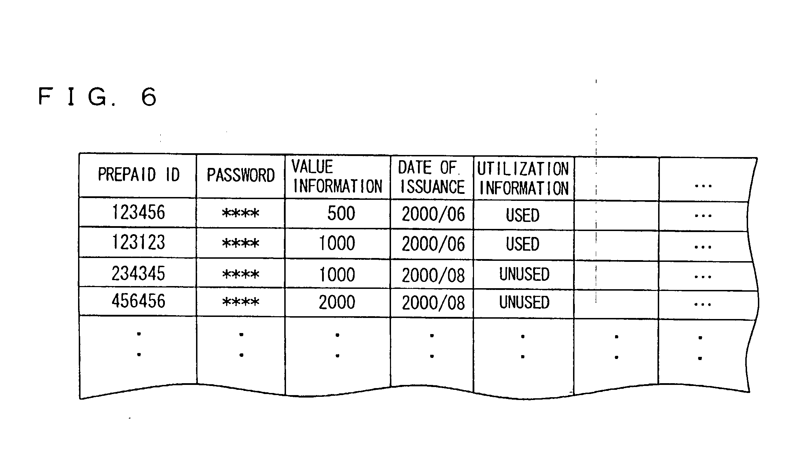

Fourth storage unit 124 stores prepayment information. Fig. 6 shows exemplary data stored in fourth storage unit 124. Referring to Fig. 6, fourth storage unit 124 stores, for each prepaid card, a prepaid ID for identification of the prepaid card, a password of the prepaid card, value information, date of issuance, utilization information and others, which are related to the relevant prepaid ID.

Specifically, the prepaid ID, the password and the value information of a prepaid card are predetermined as the prepayment information at the time when it is manufactured or sold. As the utilization information, either "used" or "unused" is recorded according to whether a user has used the relevant prepaid card.

When the card is "used" by a user, the value information corresponding to the relevant prepaid ID is added to the credit balance information of the relevant user shown in Fig. 5.

Returning to Fig. 2, control unit 110 is composed of a central processing unit, a temporary storage device, a data communication path connection device and a main program storage unit, which are not shown in the drawing.

The central processing unit performs control of respective units, selection and transfer of data, temporary storage of information and others, according to a main program stored in the main program storage unit.

The temporary storage device temporarily stores processed results of the central processing unit.

The data communication path connection device connects server system 100 to data communication path 300, and communicates with terminal devices 200, 210 and 220 in both directions via data communication path 300.

The main program stored in the main program storage unit is a program for implementation of the application communication system, which controls the entire server system 100. It includes a plurality of programs.

Specifically, the main program includes: a program for displaying at a terminal side a guiding image plane to let a user select a necessary application and various settings; a program for determining, upon reception of a distribution request from the terminal side, whether the required application can be distributed to the terminal side according to the credit balance information extracted from third storage unit 123; a program for selecting and sending a sub-application stored in first storage unit 121 based on a next application ID received from the terminal; a program for storing the application utilization history and others received from the terminal in third storage unit 123; and a program for extracting the application utilization history of a user from third storage unit 123 and, based on the extracted information, extracting appropriate advertisement data and others from first storage unit 121 to send to the relevant user.

The main program may be prestored within the main program storage unit, or it may be recorded in a removable recording medium 111 such as a CD-ROM.

If the program is recorded in the removable recording medium, the recorded program is read from the recording medium by, e.g., a CD-ROM drive, not shown in Fig. 2, and temporarily stored in the main program storage unit.

Examples of such recording mediums for recording programs therein are: tape-type mediums like magnetic tape and cassette tape; disc-type mediums like magnetic discs (flexible disc, hard disk device and others) and optical discs (CD-ROM, MO, MD, DVD and others); card-type mediums like IC card (including memory card) and optical card; and semiconductor memories like mask ROM, EPROM, EEPROM and flash ROM. They carry the programs in a fixed manner.

The recording medium may be of the type that carries the program in a flexible manner, as in the case where the program is downloaded from a network. In such a case, a program for use in the downloading is prestored in server system 100 or pre-installed in server system 100 from another recording medium.

The recording medium may store, not only the program, but also data.

How the main program is executed will be described later, giving a specific example.

Now, terminal devices 200, 210, 220 shown in Fig. 1 will be described in brief. As these devices are identical in primary functional configuration, mobile terminal 200 will be explained representatively.

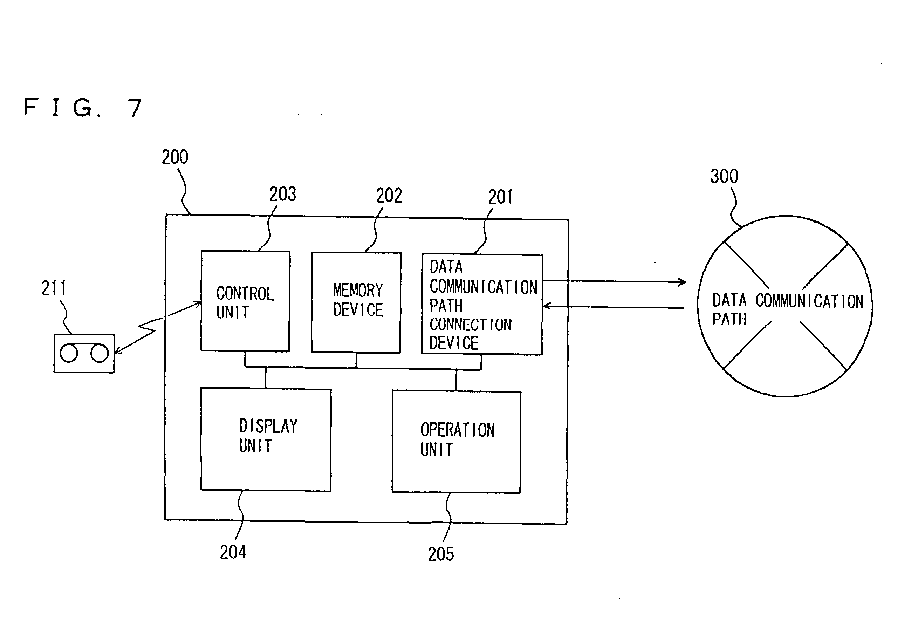

Fig. 7 is a block diagram showing a schematic configuration of mobile terminal 200. Referring to Fig. 7, mobile terminal 200 is provided with a data communication path connection device 201, a memory device 202, a control unit 203, a display unit 204 and an operation unit 205.

Data communication path connection device 201 connects mobile terminal 200 to data communication path 300 and performs bi-directional communication with server system 100 via data communication path 300.

Memory device 202 stores data sent from server system 100, e.g., a sub-application sent in response to a send request.

Control unit 203 is provided with a central processing unit and a main program storage unit, not shown. It controls data communication path connection device 201, memory device 202, display unit 204 and control unit 205, according to the main program stored.

For example, control unit 203 controls sending/receiving of data to/from memory device 202 for execution of a sub-application stored in memory device 202. Upon execution of the sub-application, it controls display unit 204 and operation unit 205 serving as user interfaces. To request a sub-application that is supposed to be required next, control unit 203 also controls the operation of data communication path connection device 201 so as to send the relevant application ID to server system 100.

The main program may be prestored in the main program storage unit, or may be recorded in a removable recording medium 211 like a magnetic tape. As this recording medium 211, again, those described above in conjunction with Fig. 2 may be employed.

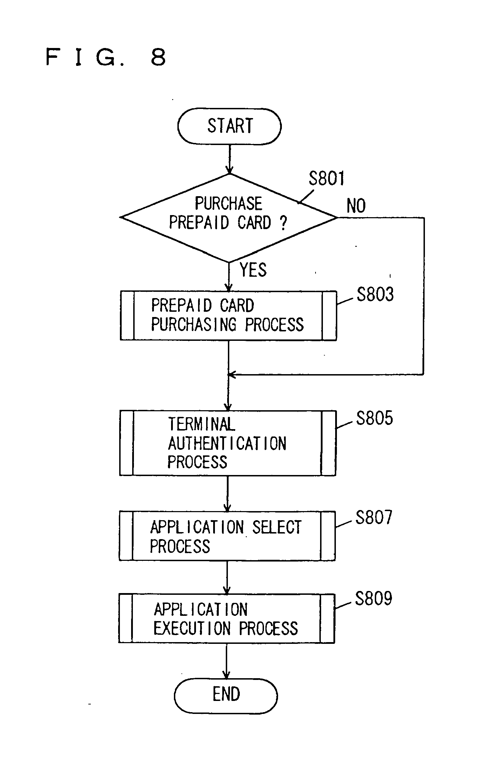

A process flow of the application communication system having the configuration as described above will now be described in detail with reference to Figs. 8-16.

Fig. 8 is a flow chart illustrating the process flow of the entire application communication system according to the present embodiment. Described herein is the case where a prepaid card is used as a medium of payment for a price of application. Mobile terminal 200 is taken as an example of the terminal device.

Referring to Fig. 8, if a user who wants distribution of an application purchases a prepaid card ("yes" in step S801), control goes to step S803, wherein a prepaid card purchasing process is conducted.

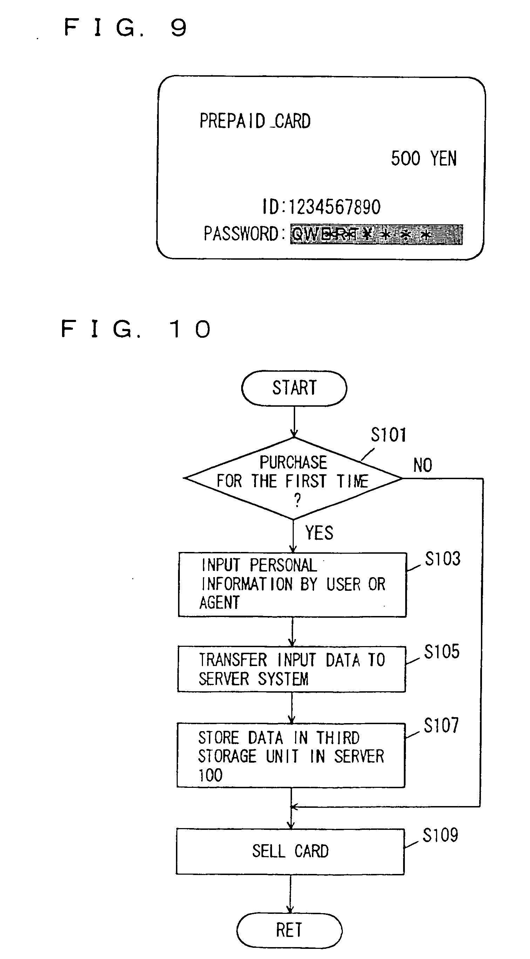

Fig. 9 shows an example of the prepaid card being purchased. As shown in Fig. 9, prepaid ID, password for the prepaid card, value information, date of issuance and others are written on the prepaid card. Thus, the user who purchased the prepaid card by paying a desired sum can read the ID and the password given in advance to the card. Such information about the prepaid card is already registered in fourth storage unit 124 of server system 100.

If the user does not purchase the prepaid card, step S803 is skipped, and control goes to step S805.

In step S805, the user terminal and the server system are connected to each other, and the user information is examined. More specifically, an authentication process of the user information sent from mobile terminal 200 is performed based on the user information stored in third storage unit 123 of server system 100.

Next, in step S807, a select process of desired application is performed. More specifically, a sub-application is distributed and payment is made for the price of the sub-application.

When distribution of the desired application is completed, the distributed application is executed on the user terminal side in step S809. If necessary, a next sub-application is distributed, which is also executed.

The process flow of the entire application communication system has roughly been described. Hereinafter, each process will be described in detail.

Fig. 10 is a flow chart illustrating a sub-routine for the prepaid card purchasing process (step S803) in Fig. 8. The user purchases the prepaid card as shown in Fig. 9 at a convenience store, a toyshop, a bookstore or the like.

Referring to Fig. 10, if it is the first time that the user purchases a prepaid card, i.e., if the user connects to server system 100 for the first time ("yes" in step S101), personal information of the user and others are input in step S103. More specifically, the user or his/her agent uses a dedicated terminal to input user ID, password, personal information and others.

Then, in step S105, the input personal information and others are sent via data communication path 300 to server system 100. In step S107, server system 100 receives and stores the personal information and others (user ID, password, personal information and others) in third storage unit 123.

After the transfer of data including the personal information, the prepaid card is sold to the user in step S109. The sub-routine is completed, and control returns to the main routine in Fig. 8.

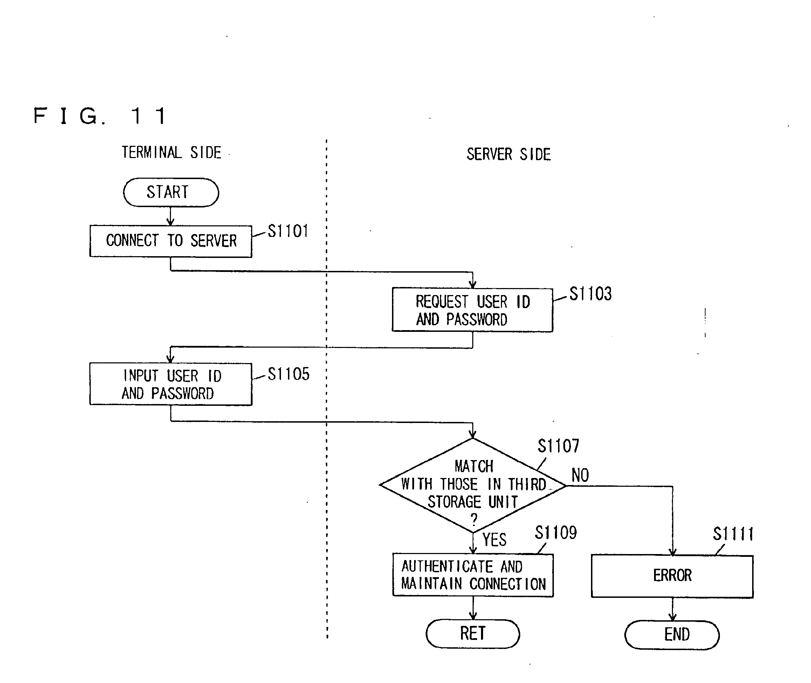

Fig. 11 is a flow chart illustrating a sub-routine for the terminal authentication process (step S805) in Fig. 8. Referring to Fig. 11, first in step S1101, the user connects to server system 100 by mobile terminal 200 with which an application can be utilized. Connection to server system 100 can be made by a mobile terminal 200 that has a function to automatically connect to server system 100.

When the connection is established, in step S1103, server system 100 sends to mobile terminal 200 a request for input of user ID, password and others. In step S1105, mobile terminal 200 that received the request displays an input request image plane on display unit 204 to prompt user input. The user inputs data including user ID and password from operation unit 205, following the directions on the image plane. The input data are transferred to server system 100. Data input at this time is not limited to manual input from operation unit 205. For example, the user ID, password and others may be prestored in mobile terminal 200, and they may be used for transmission.

In step S1107, server system 100 compares the received user ID and password with those stored in third storage unit 123 to determine whether the user is legitimate.

If the user is unauthorized ("no" in step S1107), an error is identified in step S1111, and mobile terminal 200 is prohibited from proceeding to the subsequent step.

If the user is authorized ("yes" in step S1107), the connection between mobile terminal 200 and server system 100 is maintained (step S1109), and the terminal authentication process is completed.

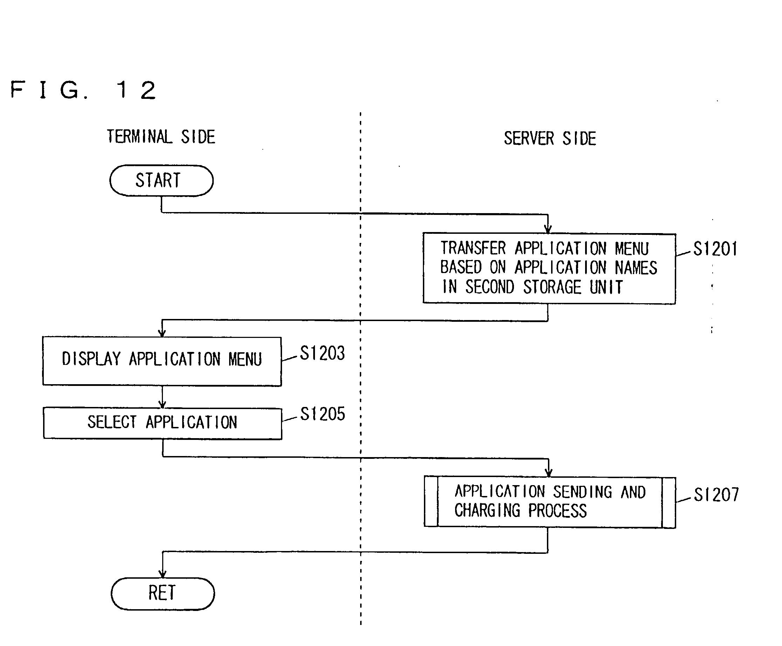

Fig. 12 is a flow chart illustrating a sub-routine for the application select process (step S807) in Fig. 8. Referring to Fig. 12, in step S1201, server system 100 sends a menu of applications to mobile terminal 200 based on the application names stored in second storage unit 122.

Mobile terminal 200 receives and displays the application menu on display unit 204 (step S1203). The user selects a desired application from the menu displayed (step S1205). Information about the selected application is sent to server system 100. Here, assume that a golf game has been selected as the application.

In step S1207, server system 100 that received the information of the selected application sends the relevant application and charges therefor.

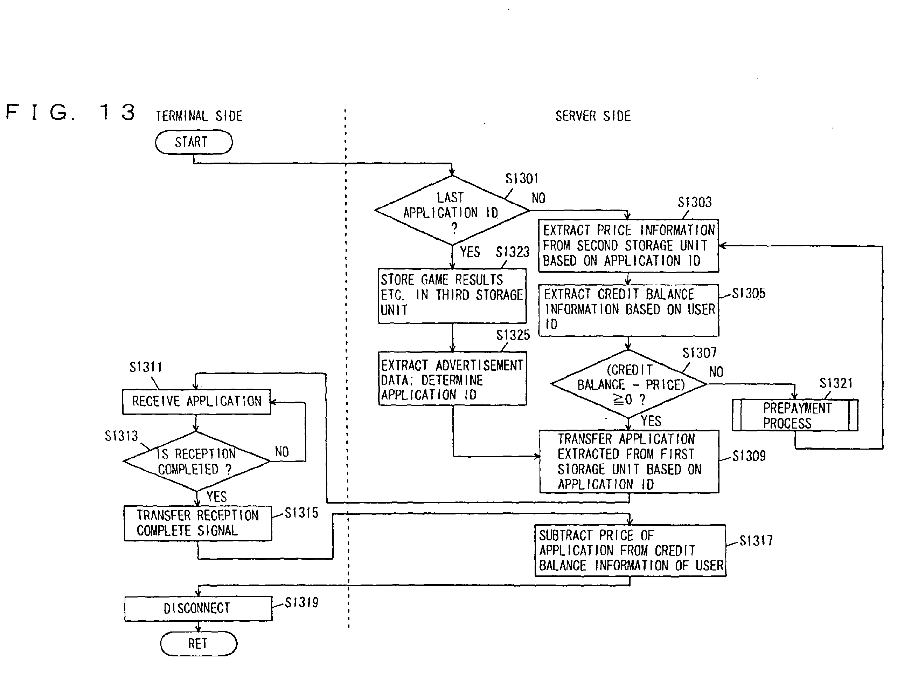

Fig. 13 is a flow chart illustrating a sub-routine for the application sending and charging process (step S1207) in Fig. 12. Referring to Fig. 13, first, in step S1301, server system 100 determines whether the selected sub-application, i.e., the object of the send request, includes the application ID identifying that it is the last sub-application.

If not, control goes to step S1303. In step S1303, control unit 110 extracts, based on the application name (or application ID) received, price information of the relevant sub-application from second storage unit 122.

This time, it is assumed that the application name "Golf Game" is received. This application of "Golf Game" has been divided into n sub-applications, and application ID of the first sub-application is extracted. The price information is extracted from second storage unit 122 based on this application ID.

When the price information of the sub-application to be sent is extracted, next in step S1305, the credit balance information corresponding to the relevant user ID is extracted from third storage unit 123. In step S1307, comparison is made between the price information of the sub-application and the credit balance information corresponding to the user ID.

As a result of comparison, if (credit balance - price) ≥ 0 ("yes" in step S1307), the relevant sub-application is transferred in step S1309. More specifically, the sub-application stored in first storage unit 121 that corresponds to the application ID in second storage unit 122 is read out and transferred to mobile terminal 200.

If (credit balance - price) < 0 ("no" in step S1307), the prepayment process is conducted in step S1321.

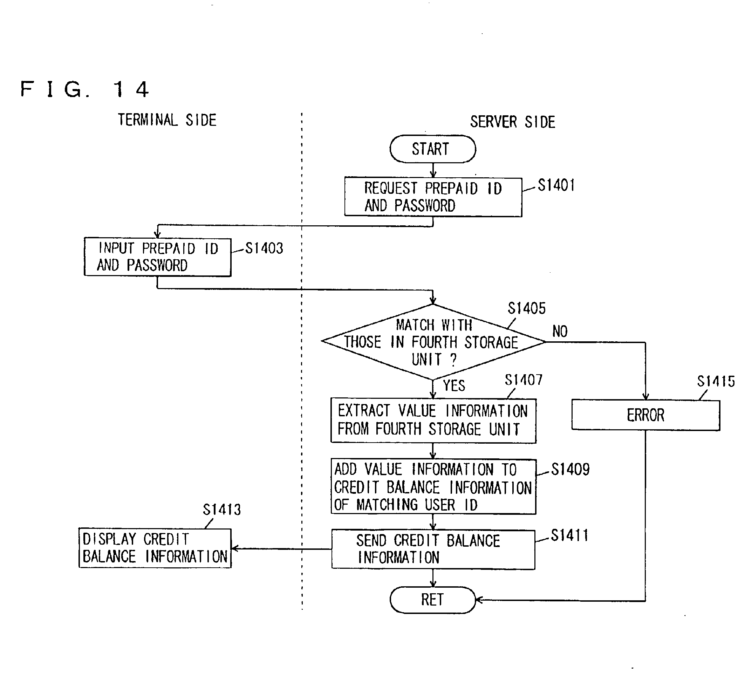

Fig. 14 is a flow chart illustrating a sub-routine of this prepayment process (step S1321 in Fig. 13). Referring to Fig. 14, in step S1401, an input request for prepaid ID, password for the prepaid card and others is sent from server system 100 to mobile terminal 200.

In S1403, mobile terminal 200 that received the input request displays an input request image plane on display unit 204 to prompt user input. The user follows the directions on the screen and inputs data including prepaid ID and password from a keyboard or the like. The input data are transferred from mobile terminal 200 to server system 100. The user may directly input the data using a keyboard and others. Alternatively, a prepaid card may be utilized if it is an IC card or a magnetic card and the terminal is provided with a reading function.

In receipt of the prepaid ID and others, server system 100 checks the received data in step S1405. More specifically, it compares the received data with the prepaid ID and password for the prepaid card stored in fourth storage unit 124, for authentication of the relevant prepaid card.

As a result of comparison, if it is determined that the prepaid card is unauthorized ("no" in step S1405), an error is identified in step S1415, and the user is notified of foulness and prohibited from proceeding to the subsequent step.

As a result of comparison, if it is determined that the card is legitimate ("yes" in step S1405), in step S1407, the value information corresponding to the prepaid ID is extracted from fourth storage unit 124. In step S1409, the extracted value information is added to the credit balance information in third storage unit 123. At this time, "used" is recorded as the utilization information in fourth storage unit 124.

Next, in step S1411, the credit balance information after the value information was added thereto is sent from server system 100 to mobile terminal 200 to notify the user. In mobile terminal 200, the received credit balance information is displayed on display unit 204 in step S1413.

When the prepayment process is thus completed, control returns to step S1307 in Fig. 13. In step S1307, the current credit balance information, i.e., the credit balance information to which the value information of prepaid card has been added, is compared with the price information of the desired sub-application. Control then goes to the prepayment process in step S1321, or to the transfer process of the relevant sub-application in step S1309, according to the comparison result.

When the relevant sub-application is sent from first storage unit 121 to mobile terminal 200 in step S1309, mobile terminal 200 receives it in step S1311.

When the reception of the sub-application is completed ("yes" in step S1313), mobile terminal 200 sends a reception complete signal to server system 100 in step S1315.

Upon receipt of this reception complete signal, in server system 100, the price information associated with the application ID stored in second storage unit 122 is subtracted from the credit balance information corresponding to the user ID stored in third storage unit 123 in step S1317. It means that the user terminal makes payment for the sub-application only after the reception of the sub-application is completed. The result after the subtraction is recorded as the corresponding credit balance information.

When the payment is completed, mobile terminal 200 disconnects with server system 100 in step S1319. The application sending and charging process is thus completed.

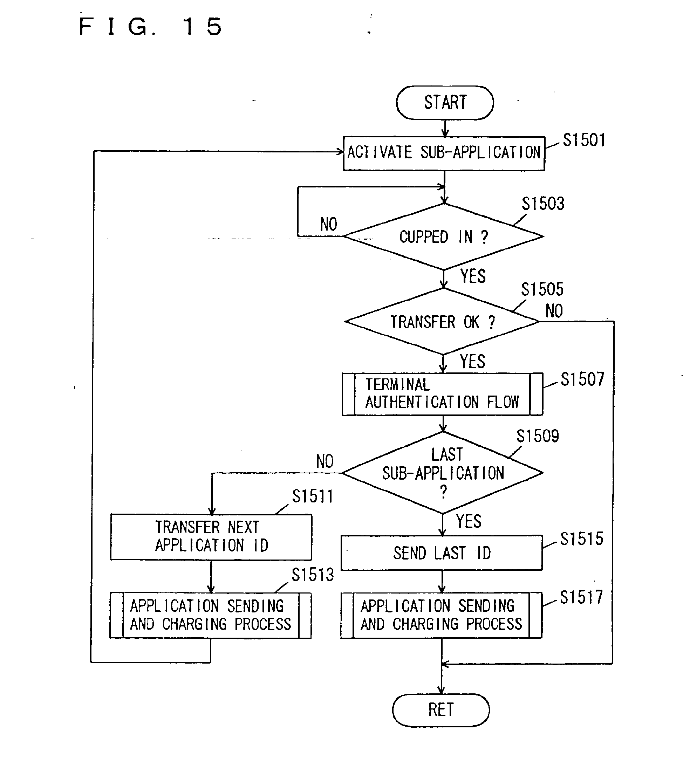

Fig. 15 is a flow chart illustrating a sub-routine for the application execution process (step S809) in Fig. 8. Referring to Fig. 15, first, in step S1501, the application received in response to the request is activated in mobile terminal 200.

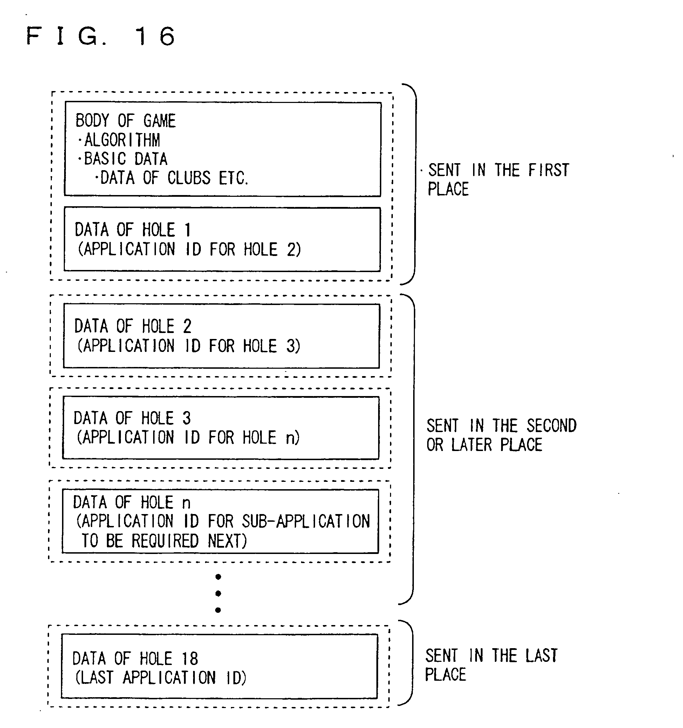

Here, the application of interest is assumed to be the golf game. Fig. 16 shows a configuration of the golf game to be executed. Referring to Fig. 16, this golf game is divided into sub-applications corresponding to respective holes from Hole 1 to Hole 18.

The contents of the golf game to be transferred to mobile terminal 200 in the first place include the basic information of the golf game (i.e., basic program and information of the golf game) and data for Hole 1. The contents of the golf game to be transferred to mobile terminal 200 in the second or later place include just the data for respective holes, the basic information of the golf game being not included therein.

Here, it is configured such that the basic program is included within the contents being sent in the first place. However, it does not exclude the possibility that the basic program is included within the contents being sent in the second or later place.

Each sub-application includes the application ID of a sub-application that is expected to be utilized next.

Returning to Fig. 15, when the golf game is used for the first time, the sub-application sent in the first place is activated. Thus, the golf game of Hole 1 is executed. When cupped in and the play of Hole 1 is finished ("yes" in step S1503), in step S1505, it is determined whether the next sub-application can be transferred. More specifically, it is determined whether the user wants the next sub-application to be transferred or not.

If the transfer is possible ("yes" in step S1505), control goes to step S1507, and mobile terminal 200 is connected to server system 100. That is, the terminal authentication process shown in Fig. 11 is performed again. If the transfer is impossible ("no" in step S1505), mobile terminal 200 is not connected to server system 100, and the game is terminated.

When connection to server system 100 is established according to the terminal authentication process in Fig. 11, mobile terminal 200 determines, in step S1509, whether the sub-application currently cupped in is the last sub-application.

This determination is made based on the application ID indicating a sub-application to be utilized next, which is included in each sub-application. If the relevant application ID is not the one identifying that it is the last sub-application ("no" in step S1509), control goes to step S1511. If the application ID is the one that identifies that it is the last sub-application ("yes" in step S1509), control goes to step S1515.

If it is not the last application, the application ID indicating the next sub-application is transferred from mobile terminal 200 to server system 100 in step S1511. In step S1513, the application sending and charging process shown in Fig. 13 is performed again.

In this case, the determination is made as "no" in decision step S1301 in Fig. 13, and therefore, step S1303 and succeeding steps are repeated. More specifically, the procedures as in the case of Hole 1 are repeated for Hole 2 through Hole 17.

Returning to Fig. 15, if it is the last application, i.e., when Hole 18 is cupped in, the application ID identifying that it is the last sub-application is transferred from mobile terminal 200 to server system 100 in step S1515. At this time, the game results and the like are transferred together. In step S1517, the application sending and charging process as shown in Fig. 13 is performed again.

In this case, as the determination is made as "yes" in decision step S1301 in Fig. 13, step S1323 and succeeding steps are performed. More specifically, in step S1323, server system 100 records the application ID identifying that it is the last sub-application, the game results and others, as the application utilization history information in third storage unit 123.

Then, in step S1325, server system 100 extracts appropriate advertisement data and others from first storage unit 121, referring to the utilization history information stored in third storage unit 123. The advertisement data and others thus extracted are sent from server system 100 to mobile terminal 200.

According to the process flow of the application communication system as described above, an application to be communicated is divided into a plurality of sub-applications, and only necessary sub-applications are sent/received in one communication. Further, at least the sub-application being sent in the first place is executable alone. Thus, the user is able to execute the sub-application immediately after he/she received it. Accordingly, it becomes possible to execute the application in an extremely short period of time after the user issued the send request.

In addition, the communication cost that is required for starting the execution of a desired application is reduced. The user is allowed to execute a part of the application and, thereafter, to decide whether he/she wants to execute the remaining sub-application(s) continuously. This broadens the user's options, and also avoids the conventional inconvenience that the entire application should always be sent regardless of the user's wish.

Further, since the data capacity being sent at one time is small, the traffic load on the communication line is reduced. Since the sub-application can be executed alone, the storage capacity required for the terminal device is also reduced.

Payment for the transferred application is demanded, not for the entire application, but for each sub-application. Accordingly, the user is charged only for the sub-application(s) he/she needs. This makes it possible to utilize an application at a minimum price.

Moreover, the payment is demanded after the transfer of sub-application is completed, even for a terminal whose communication condition is unstable like mobile terminal 200. Accordingly, the user of such terminal is able to make a send request for an application without anxiety.

Still further, the prepayment information of a prepaid card or the like is managed on server system 100 side, along with the credit balance information of the relevant user, which cannot be tampered with. Thus, the credibility of the application communication system itself is improved, ensuring smooth operation of the system.

In the configuration of the golf game shown in Fig. 16, the application is divided into sub-applications corresponding to respective holes. However, the configuration is not limited thereto. For example, the application may further be divided according to the ways to address balls, e.g., in the bunker, in the pond, and out of bounds in respective holes, and these sub-applications may be transferred to a terminal when necessary.

Although the golf game has been given as an example of the application in Figs. 15 and 16, the present embodiment is not limited thereto. For example, the present embodiment can be applied to the case where book data of a novel is divided into respective chapters like Chapter 1, Chapter 2 and others, or to the case where a demo program is divided into respective steps along the order of demonstration. In other words, the present invention can be applied to any application whose sub-applications have a specific order for execution and whose object can be achieved by executing the sub-applications in the order.

In Fig. 15 and others, the case where the sub-applications of the golf game are executed in order from Hole 1 to Hole 18 has been described. However, the present invention is not limited thereto. Some application may allow a change in the order of execution of its sub-applications, depending on the contents. Another application may be finished, with its object being achieved, before all the sub-applications are executed. The present invention is also applicable to such cases.

Further, in the present embodiment, one sub-application has been defined as the communication unit of one communication. However, upon the user's request, two or more sub-applications may be communicated at one time.

In Fig. 13 and others, the case where payment is demanded (made) for each sub-application has been described. However, the price for the entire application, i.e., for all the n sub-applications 1-n may be charged (paid) in a lump.

In the present embodiment, the case where the price of the supplied application is paid by the prepaid card has been described. However, the medium of payment is not limited to the prepaid card. It may be charged to the user's bank account, or a debit card may be utilized. It may be paid later on demand, or any other charging (payment) method can be employed.

### First Modification

The first modification of the first embodiment will now be described. The first modification differs from the first embodiment in that the price of each sub-application is set according to its order of transfer. More specifically, in the present modification, the price of sub-application being sent in the second or later place is set lower than the price of sub-application being sent in the first place.

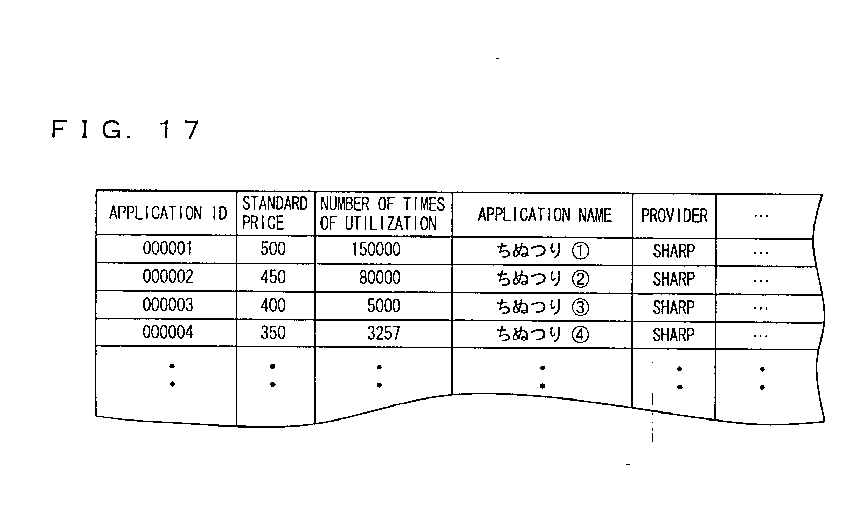

Fig. 17 shows an example of data being stored in second storage unit 122 in the first modification. Referring to Fig. 17, second storage unit 122 stores standard price, number of times of utilization, application name, name of provider and others, corresponding to each application ID.

Here, a sub-application ( 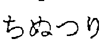 ①) having application ID 000001 corresponds to the one to be transferred in the first place among all the sub-applications constituting the application named " 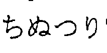 ". Therefore, compared to the standard price (500 yen) of this sub-application, the standard prices of sub-applications (having application IDs 000002, 000003 and others) that are being transferred in the second place and afterward are set lower.

Further, in Fig. 17, it is configured such that the price becomes increasingly lower as the number of transferred sub-applications increases. More specifically, the standard price is set at 500 yen for the application ID 000001; 450 yen for application ID 000002; 400 yen for application ID 000003; and 350 yen for application ID 000004, and so on. The standard prices of the sub-applications are thus set according to their order of transfer.

The charging process against the user is performed based on the standard price information shown in Fig. 17. Accordingly, in the flow chart illustrating the charging process in Fig. 13, the "price information" in step S1303 is considered as the "standard price" shown in Fig. 17.

That is, the user is charged using the "price information that is lower for a sub-application being transferred in the second or later place than for a sub-application being transferred in the first place".

Accordingly, it becomes possible to give the user who received the first sub-application an incentive to purchase and utilize the following sub-application(s).

### Second Modification

In the first modification, the standard prices of the sub-applications being sent in the second place and afterward have been set lower than that of the sub-application being sent in the first place. In the second modification, the price information of a sub-application that is to be transferred next is set, regardless of the order of transfer, based on the number of times of utilization of its preceding sub-application and a discount rate corresponding to that number of utilization.

Here, the numbers of times of utilization of respective sub-applications are stored in second storage unit 122, as shown in Fig. 17. The discount rates corresponding to these numbers of utilization are stored in a fifth storage unit 125. Thus, in the present modification, storage unit 120 shown in Figs. 1 and 2 is further provided with the fifth storage unit 125.

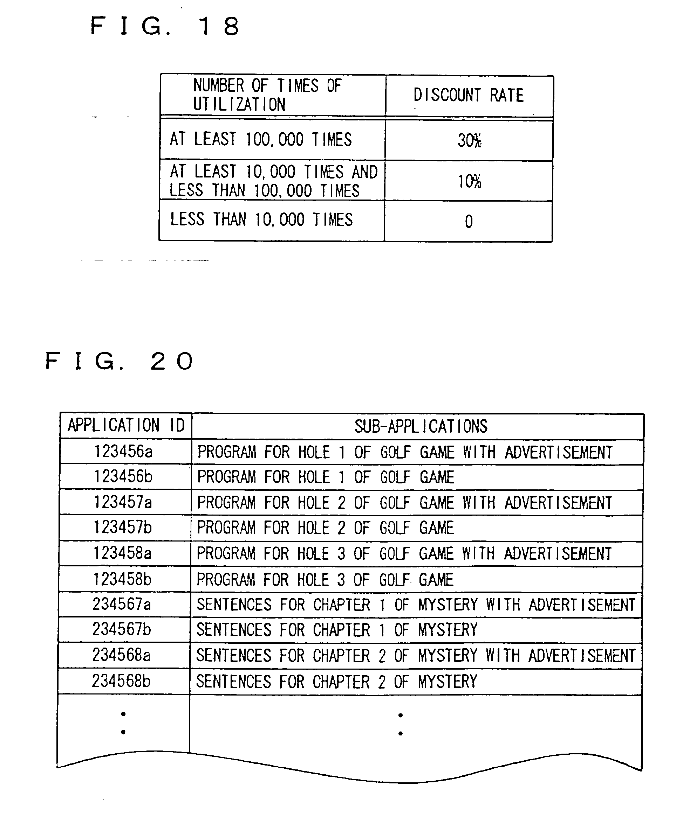

Fig. 18 shows an example of data being stored in fifth storage unit 125. Referring to Fig. 18, the discount rate is set to 0 % when the number of times of utilization of a sub-application is at least 0 and less than 10,000; 10% when it has been utilized at least 10,000 times and less than 100,000 times; and 30% when it has been utilized at least 100,000 times.

The charging process against a user is performed based on the discount rate stored in fifth storage unit 125 and the price information (standard price) stored in second storage unit 122. More specifically, a discount price of sub-application to be transferred next is set according to the discount rate and the standard price, and the charging process is conducted using the discount price.

A specific example of price setting will be described with reference to Figs. 17 and 18. Referring to Fig. 17, the number of times of utilization of application ID (000001) is 150,000, and the corresponding discount rate is 30 % from Fig. 18. Accordingly, the price of application ID (000002) to be transferred next is discounted by 30% from its standard price. Since its standard price is 450 yen, the price to be charged is set to 450 yen * (1 - 0.3) = 315 yen.

Similarly, since the number of times of utilization of application ID (000002) is 80,000, the discount rate for application ID (000003) is 10 %. Thus, the discount price of application ID (000003) is set to 400 yen * (1 - 0.1 = 360 yen.

The number of times of utilization of application ID (000003) is 5,000, and the discount rate for application ID (000004) is 0 %. Thus, the price of application ID (000004) is set to 350 yen * (1 - 0) = 350 yen.

The prices of respective sub-applications are thus set. Accordingly, in the flow chart illustrating the charging process in Fig. 13, the "price information" being extracted in step S1303 is defined as the "price information of sub-application to be transferred next that is set based on the number of times of utilization of its preceding sub-application, which is stored in second storage unit 122, and the discount rate corresponding to that number of utilization, which is stored in fifth storage unit 125".

The discount rate being stored in fifth storage unit 125 is set based on the numbers of times of utilization of respective sub-applications by a provider of the application at its own discretion.

According to the present modification, a discount is made off the standard price of sub-application to be transferred next, based on the number of times of utilization of its preceding sub-application stored in second storage unit 122 and the corresponding discount rate stored in fifth storage unit 125. Therefore, a popular application can be purchased at a lower price, which can arouse an incentive of a user to buy and use the application.

Here, the data of the type as shown in Fig. 17 has been considered to be stored in second storage unit 122. However, the present modification may also be configured to utilize the price information that has been set regardless of the order of transfer of sub-applications, as shown in Fig. 4. In this case, the price to be charged is determined according to the price information and the discount rate.

### Third Modification

In the second modification, the price of sub-application to be transferred next has been set based on the number of times of utilization of its preceding sub-application stored in second storage unit 122 and the discount rate corresponding to that number of utilization stored in fifth storage unit 125. In the present modification, the prices of sub-applications being sent in the second place and afterward are set based on the number of times of utilization of the sub-application that is sent in the first place and the discount rate corresponding to that number of utilization.

Here, again, the numbers of times of utilization of respective sub-applications are stored in second storage unit 122 as shown in Fig. 17. The discount rates corresponding to the numbers of utilization are stored in fifth storage unit 125 as shown in Fig. 18. Thus, according to the present modification, again, storage unit 120 shown in Figs. 1 and 2 is further provided with the fifth storage unit 125.

The charging process against a user is conducted based on the discount rates stored in this fifth storage unit 125 and the price information (standard prices) stored in second storage unit 122. More specifically, using the discount rate that is determined according to the number of times of utilization of the sub-application being sent in the first place, the prices of the sub-applications being sent in the second place and afterward are set, and the charging process is performed using these discount prices.

Hereinafter, the detailed procedures will be described with reference to Figs. 17 and 18. Referring to Fig. 17, since the number of times of utilization of application ID (000001) is 150,000, the discount rate is 30 % from Fig. 18. Thus, the prices of the sub-applications being sent in the second place and afterward are discounted by 30% from their respective standard prices.

For example, in the case of application ID (000002) whose standard price is 450 yen, the price being charged is set to 450 yen * (1 - 0.3) = 315 yen.

Similarly, for application ID (000003) whose standard price is 400 yen, the price being charged is set to 400 yen * (1 - 0.3) = 280 yen.

For application ID (000004), 350 yen * (1 - 0.3) = 245 yen is being charged.

The prices of respective sub-applications are thus set. Accordingly, in the flow chart illustrating the charging process in Fig. 13, the "price information" being extracted in step S1303 is defined as the "price information of sub-application being sent in the second or later place that is set based on the number of times of utilization of sub-application being sent in the first place, which is stored in second storage unit 122, and the corresponding discount rate, which is stored in fifth storage unit 125".

The discount rates being stored in fifth storage unit 125 are set based on the number of times of utilization of the sub-application that is sent in the first place, at a discretion of a provider of the application.

According to the present modification, the prices of sub-applications being sent in the second place and afterward are discounted based on the number of times of utilization of the sub-application being sent in the first place and the corresponding discount rate. Thus, a user can purchase a popular application at a lower price. Accordingly, it is possible to give a user who received the first sub-application an incentive to buy or use the following sub-application(s).

Here, again, the data shown in Fig. 17 has been employed as the exemplary data stored in second storage unit 122. However, the price information of sub-applications being set irreverent to their transfer order as shown in Fig. 4 may be used instead. In this case, the price to be charged is determined according to the price information and the discount rate.

### (2) Second Embodiment

Hereinafter, the second embodiment of the present invention will be described. The application communication system of the present embodiment has a configuration identical to that of the first embodiment. The server system of the present embodiment also has a configuration as shown in Fig. 2.

The present embodiment, however, differs from the first embodiment in the following points. First, second storage unit 122 stores information about presence/absence of advertisement and price after prescribed discount based on the presence/absence of advertisement, for each sub-application. In the case where a sub-application having advertisement corresponding thereto is being transferred, the sub-application with the advertisement that is stored in first storage unit 121 is transferred. For the sub-application having the advertisement, the charging process is performed using the price information after prescribed discount that is stored in second storage unit 122. Finally, each application ID stored in first storage unit 121 has its last bit indicating presence/absence of advertisement corresponding thereto.

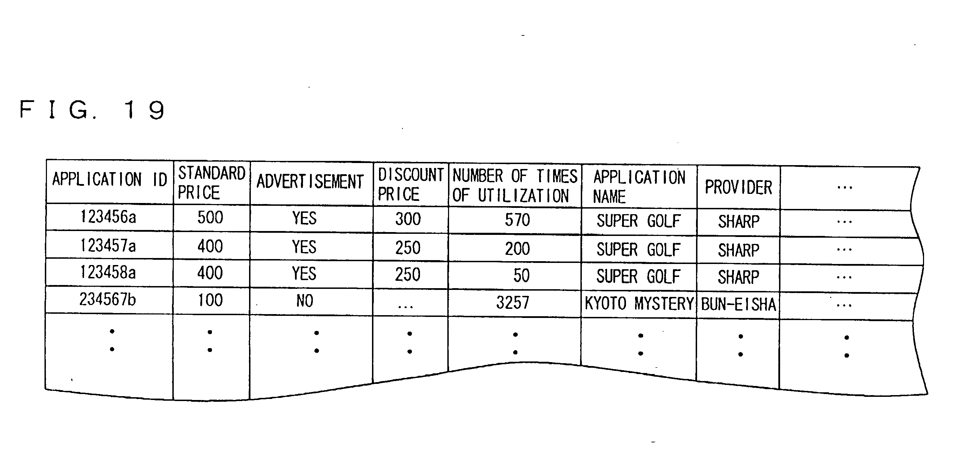

Fig. 19 shows an example of data stored in second storage unit 122 according to the second embodiment. Referring to Fig. 19, second storage unit 122 stores standard price, number of times of utilization, application name, name of provider and others for each sub-application, as in the case of the first embodiment shown in Fig. 4. In addition thereto, it also stores information about presence/absence of advertisement and discount price.

For a sub-application indicated to have advertisement corresponding thereto, an appropriate discount is made and the discount price is stored. For example, for application ID (123456a) having advertisement, 200 yen is deducted from the standard price, and 300 yen is set as its discount price. For application ID (123457a), 150 yen is deducted from the standard price to obtain a discount price of 250 yen. For application ID (123458a), 150 yen is again deducted from the standard price and the discount price is set to 250 yen.

The prices to be deducted are set as desired by the application provider and the sponsor of the advertisement data. If there are more than one sponsor of advertisement, the discount prices may be set still lower.

The charging process against a user is performed based on the price information (standard prices or discount prices) thus set. More specifically, in the case where "yes" is indicated in the column of "advertisement", the charging process is conducted using the discount price, and if "no" is indicated in the column of "advertisement", the standard price is used for the charging process.

When a sub-application indicated as "yes" in the column of "advertisement" is to be sent, the sub-application with advertisement data that is stored in first storage unit 121 is sent. Thus, in this case, the terminal which issued the send request receives the sub-application with the advertisement data attached thereto.

Fig. 20 shows an example of data being stored in first storage unit 121 in the present embodiment. As shown in Fig. 20, each sub-application ID is provided with "a" as its last bit when there is an advertisement, and provided with "b" when there is no advertisement.

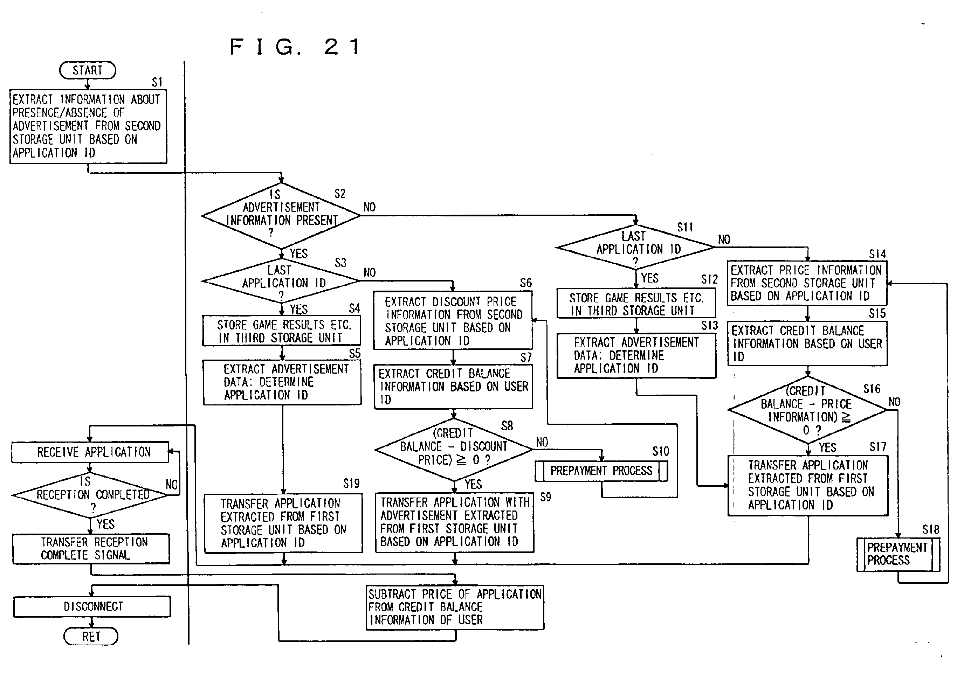

A flow of the application sending and charging process (step S1207 in Fig. 12) in the case of the present embodiment will now be described with reference to Fig. 21. Fig. 21 corresponds to the flow chart of Fig. 13 in the first embodiment. Thus, only the differences therebetween will primarily be described.

First, in step S1, information about presence/absence of advertisement for a corresponding application ID is extracted from second storage unit 122. If the advertisement information is present ("yes" in step S2), steps S3-S10 are performed. If there is no advertisement ("no" in step S2), steps S11-S18 are performed.

In the case where the advertisement is present and the relevant sub-application has an application ID identifying that it is the last sub-application ("yes" in step S3), the game results and others are stored in third storage unit 123 in step S4. Next, in step S5, the advertisement data is extracted, and the application ID is determined. In step S19, a sub-application extracted from first storage unit 121 based on this application ID is transferred.

If the application ID of the relevant sub-application is not the one identifying that it is the last application ("no" in step S3), the discount price information is extracted from second storage unit 122 based on the application ID in step S6. Next, in step S7, the credit balance information is extracted based on the user ID, and in step S8, a comparison is made between the credit balance information and the discount price information.

As a result of the comparison, if (credit balance - discount price) ≥ 0, the sub-application with advertisement data is transferred from the server system to the terminal in step S9.

On the contrary, if (credit balance - price after prescribed discount) < 0, the prepayment process is conducted in step S10.

If there is no advertisement ("no" in step S2), the application sending and charging process identical to that in the first embodiment is performed (steps S11-S18).

As explained above, according to the present embodiment, if a sub-application has advertisement corresponding thereto, the application provider charges a user a price after prescribed discount, and collects the difference from the sponsor of the advertisement.

Accordingly, from the standpoint of a user receiving the application, he/she is able to purchase the sub-application at a low price. Further, since related advertisement data is sent at the same time, the user can receive latest information that would attract his/her interest.

From the standpoint of a sponsor of advertisement, he/she is able to advertise as desired by providing the user with the latest information of, e.g., a new application.

If the advertisement of the latest information about a new application or the like is made via printed matters or storage mediums, time lag of several weeks usually occurs until they are distributed, so that the freshness thereof tends to be lost. This poses a serious problem in terms of capturing users. Further, the advertisement should be distributed even to those having no interest therein, which is wasteful for both the sponsor and receivers of the advertisement.

According to the present embodiment, a sub-application with advertisement is transferred only when a sub-application that is indicated as having advertisement is being transferred. This enables advertisement with a minimum advertisement rate. Accordingly, the present embodiment proposes an advantage that even a person who runs a small-scale business, e.g. a private developer of game software, is able to publish advertisement data.

Further, according to the present embodiment, the application communication system allows participation of sponsors of advertisement, besides application providers and users between which applications are communicated. Therefore, the application providers, the users and the sponsors of advertisement are all activated.

Although the present invention has been described and illustrated in detail, it is clearly understood that the same is by way of illustration and example only and is not to be taken by way of limitation, the scope of the present invention being limited only by the terms of the appended claims.

## Claims

1. A server device, comprising:
a first storage unit (121) storing an application divided into a plurality of sub-applications;
a receiving unit (110) receiving information from a user; and
a sending unit (110) sending at least one of said sub-applications according to said information received, wherein:
at least one of said sub-applications being executable alone;
said sub-applications have their order for execution, and an object of the application in its undivided form is achieved by executing said sub-applications in said order;
said first storage unit (121) stores said sub-applications by relating them with IDs for identification thereof; **characterised in that**:
said sub-application includes the ID of the sub-application that is to be utilized next; and
when said receiving unit receives the ID of said sub-application to be utilised next, said sending unit sends, based on said ID received, the relevant sub-application stored in said first storage unit; and
at least one of said sub-applications includes an ID that identifies that the relevant sub-application is the last one.

2. The server device according to claim 1, wherein said sending unit first sends the sub-application that is executable alone.

3. The server device according to claim 1, further comprising a second storage unit (122) storing prescribed information for each said sub-application.

4. The server device according to claim 3, wherein said prescribed information includes an ID of said sub-application and price information corresponding thereto.

5. The server device according to claim 4, wherein said price information corresponding to said sub-application that is being sent in the second or later place is set lower than said price information corresponding to said sub-application that is being sent in the first place.

6. The server device according to claim 3, wherein said prescribed information includes a number of times of utilization of said sub-application.

7. The server device according to claim 6, further comprising a fifth storage unit (120) storing information of a discount rate corresponding to said number of times of utilization.

8. The server device according to claim 7, further comprising a setting unit setting a price of the sub-application to be transferred next, based on the number of times of utilization of prescribed said sub-application that is stored in said second storage unit (122) and the discount rate corresponding to the relevant number of times of utilization that is stored in said fifth storage unit (120).

9. The server device according to claim 7, further comprising a setting unit setting a price of the sub-application to be transferred in the second or later place, based on the number of times of utilization of the sub-application being sent in the first place that is stored in said second storage unit (122) and the discount rate corresponding to the relevant number of times of utilization that is stored in said fifth storage unit (120).

10. The server device according to claim 3, wherein said prescribed information includes information about presence/absence of advertisement.

11. The server device according to claim 10, wherein when the sub-application for which said stored information about presence/absence of advertisement indicates the presence of the advertisement is to be sent, said sending unit (110) sends the relevant sub-application with corresponding advertisement data attached thereto.

12. The server device according to claim 3, wherein said prescribed information includes an application name corresponding to said sub-application.

13. The server device according to claim 1, further comprising a third storage unit (123) storing user information.

14. The server device according to claim 13, wherein said user information includes user ID and password for identification of a user.

15. The server device according to claim 14, further comprising a first determination unit (110) determining, when said receiving unit (110) receives user ID and password, whether said received user ID and password match the user ID and password stored in said third storage unit (123).

16. The server device according to claim 15, further comprising a prohibition unit (110) prohibiting a sending operation of said sending unit when said first determination unit (110) determines that the user IDs and the passwords mismatch.

17. The server device according to claim 13, wherein said user information includes an application utilization history.

18. The server device according to claim 17, further comprising:
an extract unit extracting appropriate advertisement data stored in said first storage unit (121) based on said utilization history stored; and
an advertisement data sending unit (110) sending said advertisement data extracted.

19. The server device according to claim 13, wherein said user information includes credit balance information of a user.

20. The server device according to claim 1, further comprising a charging unit charging a user a price of said sub-application every time said sending unit (110) sends said sub-application to the user.

21. The server device according to claim 20, further comprising a confirmation unit confirming whether sending of said sub-application from said sending unit (110) is completed,
wherein said charging unit (110) charges for said sub-application when said confirmation unit confirms completion of the sending.

22. A terminal device communicating with the server device according to claim 1, comprising:
a terminal receiving unit (203) receiving said sub-application from said server device;
an execution unit (203) executing said sub-application received; and
a request unit (203) requesting sending of a next sub-application according to a result of execution of said received sub-application by said execution unit, **characterised in** the next sub-application being identified based on information about the sub-application to be utilized next that is stored in said received sub-application;
if the sub-application is the last one, it is identified as the last one by the information about the sub-application to be utilized next.

23. The terminal device according to claim 22, wherein when advertisement data corresponding to said sub-application is sent along with said sub-application, said terminal receiving unit receives the advertisement data as well.

24. The terminal device according to claim 22, further comprising a terminal sending unit (203) sending a reception complete signal when said terminal receiving unit completes a receiving operation of said sub-application.

25. An application communication method, comprising:
a first storing step of storing an application divided into a plurality of sub-applications;
a receiving step of receiving information from a user; and
a sending step of sending at least one of said sub-applications according to said received information, wherein:
at least one of said sub-applications being executable alone;
said sub-applications have their order for execution, and an object of the application in its undivided form is achieved by executing said sub-applications in said order;
said first storing step includes the step of storing said sub-applications by relating them with IDs for identification thereof; **characterised in that**:
said sub-applications each include the ID of the sub-application that is to be utilized next; and
said sending step includes the step of, when the ID of said sub-application to be utilized next is received in said receiving step, sending the relevant sub-application stored in said first storing step based on said received ID; and
at least one of said sub-applications includes an ID indicating that the relevant sub-application is the last one.

26. The application communication method according to claim 25,
wherein said sending step includes the step of sending the sub-application executable alone first.

27. The application communication method according to claim 25, further comprising a second storing step of storing prescribed information for each said sub-application.

28. The application communication method according to claim 25,
wherein said prescribed information includes an ID of said sub-application and price information corresponding thereto.

29. The application communication method according to claim 28,
wherein said price information corresponding to said sub-application that is to be sent in the second or later place is lower than said price information corresponding to said sub-application that is being sent in the first place.

30. The application communication method according to claim 27,
wherein said prescribed information includes a number of times of utilization of said sub-application.

31. The application communication method according to claim 30, further comprising a fifth storing step of storing information of a discount rate corresponding to said number of times of utilization.

32. The application communication method according to claim 31, further comprising a setting step of setting a price of the sub-application that is to be utilized next, based on the number of times of utilization of prescribed said sub-application that is stored in said second storing step and the discount rate corresponding to the relevant number of times of utilization that is stored in said fifth storing step.

33. The application communication method according to claim 32, further comprising a setting step of setting a price of the sub-application that is to be sent in the second or later place, based on the number of times of utilization of the sub-application being sent in the first place that is stored in said second storing step and the discount rate corresponding to the relevant number of times of utilization that is stored in said fifth storing step.

34. The application communication method according to claim 27,
wherein said prescribed information includes information about presence/absence of advertisement.

35. The application communication method according to claim 34,
wherein when the sub-application for which said stored information about presence/absence of advertisement indicates the presence of the advertisement is being sent, said sending step includes the step of sending said sub-application with corresponding advertisement data attached thereto.

36. The application communication method according to claim 27,
wherein said prescribed information includes an application name corresponding to said sub-application.

37. The application communication method according to claim 25, further comprising a third storing step of storing user information.

38. The application communication method according to claim 37,
wherein said user information includes user ID and password for identification of a user.

39. The application communication method according to claim 38, further comprising a first determining step of determining, when user ID and password are received in said receiving step, whether said received user ID and password match the user ID and password stored in said third storing step.

40. The application communication method according to claim 39, further comprising a prohibiting step of prohibiting a sending operation by said sending step when said first determining step determines that the user IDs and passwords mismatch.

41. The application communication method according to claim 37,
wherein said user information includes an application utilization history.

42. The application communication method according to claim 41, further comprising:
an extracting step of extracting, based on said utilization history stored, appropriate advertisement data stored in said first storing step; and
an advertisement data sending step of sending said extracted advertisement data.

43. The application communication method according to claim 25,
wherein said user information includes credit balance information of a user.

44. The application communication method according to claim 25, further comprising a charging step of charging a user a price of said sub-application every time said sub-application is sent to the user in said sending step.

45. The application communication method according to claim 44, further comprising a confirming step of confirming whether sending of said sub-application is completed in said sending step,
wherein said charging step includes the step of charging for said sub-application when completion of the sending is confirmed by said confirming step.

46. An application communication method executable by the terminal device according to claim 22, comprising:
a receiving step of receiving a sub-application as a portion of a divided application;
an executing step of executing said sub-application received; and
a requesting step of issuing a send request for a next sub-application according to a result of execution by said executing step, **characterised in** the next sub-application being identified based on information of the sub-application to be utilized next that is stored in said received sub-application;
if the sub-application is the last one, it is identified as the last one by the information of the sub-application to be utilized next.

47. The application communication method according to claim 46, further comprising a sending step of sending a reception complete signal when a receiving operation of the sub-application is completed in said receiving step.

48. A recording medium recording an application communication program, the application communication program comprising program code means for causing a computer to perform the method of claim 25.

49. An application communication program comprising program code means for causing a computer to perform the method of claim 25.

## Patentansprüche

1. Servereinrichtung, mit:
einer ersten Speichereinheit (121), welche eine in eine Mehrzahl von Unteranwendungen aufgeteilte Anwendung speichert;
einer Empfangseinheit (110), welche Information von einem Benutzer empfängt; und
einer Sendeeinheit (110), welche mindestens eine Unteranwendung gemäß der empfangenen Information sendet,
wobei:
mindestens eine der Unteranwendungen allein ausführbar ist;
die Unteranwendungen ihre Reihenfolge für die Ausführung besitzen und ein Ziel der Anwendung in ihrer ungeteilten Form erreicht wird durch Ausführen der Unteranwendungen in dieser Reihenfolge;
die erste Speichereinheit (121) die Unteranwendungen speichert durch ihr Zuordnen zu IDs zu deren Identifikation;
**dadurch gekennzeichnet:**
**dass** die Unteranwendung die ID derjenigen Unteranwendung aufweist, die als Nächstes zu verwenden ist;
**dass**, wenn die Empfangseinheit die ID der Unteranwendung, die als Nächstes zu verwenden ist, empfängt, die Sendeeinheit auf der Grundlage der empfangenen ID die entsprechende Unteranwendung, welche in der ersten Speichereinheit gespeichert ist, sendet; und
**dass** mindestens eine der Unteranwendungen eine ID aufweist, welche bestimmt, dass die entsprechende Unteranwendung die letzte ist.

2. Servereinrichtung nach Anspruch 1,
wobei die Sendeeinheit zuerst diejenige Unteranwendung sendet, die alleine ausführbar ist.

3. Servereinrichtung nach Anspruch 1,
welche des Weiteren eine zweite Speichereinheit (122) aufweist, welche vorgeschriebene Information für jede Unteranwendung speichert.

4. Servereinrichtung nach Anspruch 3,
wobei die vorgeschriebene Information eine ID der Unteranwendung und dazu korrespondierende Preisinformation aufweist.

5. Servereinrichtung nach Anspruch 4,
wobei die Preisinformation, die zu derjenigen Unteranwendung korrespondiert, die an zweiter oder späterer Stelle gesendet wird, niedriger eingestellt wird als diejenige Preisinformation, die zu der Unteranwendung korrespondiert, die an erster Stelle gesendet wird.

6. Servereinrichtung nach Anspruch 3,
wobei die vorgeschriebene Information eine Anzahl von Malen der Verwendung der Unteranwendung aufweist.

7. Servereinrichtung nach Anspruch 6,
welche des Weiteren eine fünfte Speichereinheit (120) aufweist, welche Information in Bezug auf eine Abschlagsrate speichert, welche zur Anzahl der Male der Verwendung korrespondiert.

8. Servereinrichtung nach Anspruch 7,
welche des Weiteren eine Einstelleinheit aufweist, welche einen Preis der Unteranwendung einstellt, welche als Nächstes zu übertragen ist, und zwar auf der Grundlage der Anzahl von Malen der Verwendung der vorgeschriebenen Unteranwendung, die in der zweiten Speichereinheit (122) gespeichert ist, und auf der Grundlage der Abschlagsrate, die mit der entprechenden Anzahl von Malen der Verwendung korrespondiert, welche in der fünften Speichereinheit (120) gespeichert ist.

9. Servereinrichtung nach Anspruch 7,
welche des Weiteren eine Einstelleinheit aufweist, welche einen Preis der Unteranwendung einstellt, welche an zweiter oder späterer Stelle zu übertragen ist, und zwar auf der Grundlage der Anzahl von Malen der Verwendung der Unteranwendung, die an erster Stelle gesendet wird, die in der zweiten Speichereinheit (122) gespeichert ist, und auf der Grundlage der Abschlagsrate, welche mit der entsprechenden Anzahl von Malen der Verwendung korrespondiert, die in der fünften Speichereinheit (120) gespeichert ist.

10. Servereinrichtung nach Anspruch 3,
wobei die vorgeschriebene Information Information in Bezug auf die Anwesenheit/Abwesenheit von Werbung aufweist.

11. Servereinrichtung nach Anspruch 10,
wobei, wenn die Unteranwendung, für welche die gespeicherte Information in Bezug auf die Anwesenheit/Abwesenheit von Werbung die Anwesenheit der Werbung anzeigt, zu senden ist, die Sendeeinheit (110) die entsprechende Unteranwendung mit den korrespondierenden Werbedaten daran angehängt sendet.

12. Servereinrichtung nach Anspruch 3,
wobei die vorgeschriebene Information einen Anwendungsnamen aufweist, welcher zu der Unteranwendung korrespondiert.

13. Servereinrichtung nach Anspruch 1,
welche des Weiteren eine dritte Speichereinheit (123) aufweist, welche Benutzerinformation speichert.

14. Servereinrichtung nach Anspruch 13,
wobei die Benutzerinformation eine Benutzer-ID und ein Passwort zur Identifikation eines Benutzers aufweist.

15. Servereinrichtung nach Anspruch 14,
welche des Weiteren eine erste Bestimmungseinheit (110) aufweist, welche, wenn die Empfangseinheit (110) eine Benutzer-ID und ein Passwort empfängt, bestimmt, ob die empfangene Benutzer-ID und das Passwort zur Benutzer-ID und zum Passwort passen, welche in der dritten Speichereinheit (123) gespeichert sind.

16. Servereinrichtung nach Anspruch 15,
welche des Weiteren eine Unterbindungseinheit (110) aufweist, welche einen Sendevorgang der Sendeeinheit unterbindet, wenn die erste Bestimmungseinheit (110) bestimmt, dass die Benutzer-IDs und die Passwörter nicht passen.

17. Servereinrichtung nach Anspruch 13,
wobei die Benutzerinformation eine Anwendungsverwendungsentwicklung aufweist.

18. Servereinrichtung nach Anspruch 17,
welche des Weiteren aufweist:
eine Extraktionseinheit, welche geeignete Werbungsdaten extrahiert, welche in der ersten Speichereinheit (121) gespeichert sind, und zwar auf der Grundlage der gespeicherten Verwendungsentwicklung; und
eine Werbungsdatensendeeinheit (110), welche die extrahierten Werbungsdaten sendet.

19. Servereinrichtung nach Anspruch 13,
wobei die Benutzerinformation Guthabeninformation eines Benutzers aufweist.

20. Servereinrichtung nach Anspruch 1,
welche des Weiteren eine Belastungseinheit aufweist, welche einen Benutzer mit einem Preis der Unteranwendung belastet, und zwar jedes Mal, wenn die Sendeeinheit (110) die Unteranwendung zum Benutzer sendet.

21. Servereinrichtung nach Anspruch 20,
welche des Weiteren eine Bestätigungseinheit aufweist, welche bestätigt, ob ein Senden der Unteranwendung der Sendeeinheit (110) abgeschlossen ist,
wobei die Belastungseinheit (110) für die Unteranwendung belastet, wenn die Bestätigungseinheit den Abschluss des Sendens bestätigt.

22. Endgerät, welches mit der Servereinrichtung nach Anspruch 1 kommuniziert, mit:
einer Endgeräteempfangseinheit (203), welche von der Servereinrichtung die Unteranwendung empfängt;
einer Ausführungseinheit (203), welche die empfangene Unteranwendung ausführt; und
einer Anforderungseinheit (203), welche das Senden einer nächsten Unteranwendung anfordert, und zwar gemäß einem Ausführungsergebnis der empfangenen Unteranwendung durch die Ausführungseinheit,
**dadurch gekennzeichnet,**
**dass** die nächste Unteranwendung, die identifiziert wird auf der Grundlage von Information über die als Nächstes zu verwendende Unteranwendung, in der empfangenen Unteranwendung gespeichert ist;
**dass**, falls die Unteranwendung die letzte ist, diese durch die Information in Bezug auf die als Nächstes zu verwendende Unteranwendung als die letzte identifiziert wird.

23. Endgerät nach Anspruch 22,
wobei, wenn Werbungsdaten, welche zur Unteranwendung korrespondieren, zusammen mit der Unteranwendung gesendet werden, die Endgeräteempfangseinheit auch die Werbungsdaten empfängt.

24. Endgerät nach Anspruch 22,
welche des Weiteren eine Endgerätesendeeinrichtung (203) aufweist, welche ein Empfangskomplettierungssignal sendet, wenn die Endgeräteempfangseinheit einen Empfangsvorgang der Unteranwendung abschließt.

25. Anwendungskommunikationsverfahren, mit:
einem ersten Speicherschritt des Speicherns einer in eine Mehrzahl von Unteranwendungen aufgeteilten Anwendung;
einem Empfangsschritt des Empfangens von Information von einem Benutzer; und
einem Sendeschritt des Sendens von zumindest einer der Unteranwendungen gemäß der empfangenen Informationen,
wobei:
mindestens eine der Unteranwendungen allein ausführbar ist;
die Unteranwendungen ihre Reihenfolge für eine Ausführung besitzen und ein Ziel der Anwendung in ihrer ungeteilten Form erreicht wird durch Ausführen der Unteranwendungen in dieser Reihenfolge;
der erste Speicherschritt den Schritt des Speicherns der Unteranwendungen durch deren Zuordnen zu IDs zu deren Identifikation aufweist;
**dadurch gekennzeichnet:**
**dass** die Unteranwendungen jeweils die ID derjenigen Unteranwendung aufweisen, die als Nächstes auszuführen ist; und
**dass** der Sendeschritt den Schritt aufweist des Sendens der entsprechenden Unteranwendung, die im ersten Speicherschritt gespeichert wurde, und zwar auf der Grundlage der empfangenen ID, wenn die ID der als Nächstes zu verwendenden Unteranwendung in dem Empfangsschritt empfangen wurde; und
**dass** mindestens eine der Unteranwendungen eine ID aufweist, die anzeigt, dass die entsprechende Unteranwendung die letzte ist.

26. Anwendungskommunikationsverfahren nach Anspruch 25,
wobei der Sendeschritt den Schritt des Sendens der Unteranwendung aufweist, die zuerst alleine ausführbar ist.

27. Anwendungskommunikationsverfahren nach Anspruch 25,
welches des Weiteren einen zweiten Speicherschritt des Speicherns vorgeschriebener Information für jede Unteranwendung aufweist.

28. Anwendungskommunikationsverfahren nach Anspruch 25,
wobei die vorgeschriebene Information eine ID der Unteranwendung und dazu korrespondierende Preisinformation aufweist.

29. Anwendungskommunikationsverfahren nach Anspruch 28,
wobei die Preisinformation, die zu derjenigen Unteranwendung korrespondiert, die an zweiter oder späterer Stelle zu senden ist, niedriger ist als diejenige Preisinformation, die zu der Unteranwendung korrespondiert, die an erster Stelle gesendet wird.

30. Anwendungskommunikationsverfahren nach Anspruch 27,
wobei die vorgeschriebene Information eine Anzahl von Malen der Verwendung der Unteranwendung aufweist.

31. Anwendungskommunikationsverfahren nach Anspruch 30,
welches des Weiteren einen fünften Speicherschritt des Speicherns von Information einer Abschlagsrate, welche mit der Anzahl von Malen der Verwendung korrespondiert, aufweist.

32. Anwendungskommunikationsverfahren nach Anspruch 31,
welches des Weiteren einen Einstellschritt des Einstellens eines Preises der als Nächstes zu verwendenden Unteranwendung aufweist, und zwar auf der Grundlage der Anzahl von Malen der Verwendung der vorgeschriebenen Unteranwendung, welche im zweiten Speicherschritt gespeichert wird, und auf der Grundlage der Abschlagssrate, welche zu der entsprechenden Anzahl von Malen der Verwendung korrespondiert, welche im fünften Speicherschritt gespeichert wird.

33. Anwendungskommunikationsverfahren nach Anspruch 32,
welches des Weiteren einen Einstellschritt des Einstellens eines Preises der an zweiter oder späterer Stelle zu sendenden Unteranwendung aufweist, und zwar auf der Grundlage der Anzahl von Malen der Verwendung der Unteranwendung, die an erster Stelle gesendet wird, welche im zweiten Speicherschritt gespeichert wird, und auf der Grundlage der Abschlagsrate, welche zu der entsprechenden Anzahl von Malen der Verwendung korrespondiert, die im fünften Speicherschritt gespeichert wird.

34. Anwendungskommunikationsverfahren nach Anspruch 27,
wobei die vorgeschriebene Information Information in Bezug auf eine Anwesenheit/Abwesenheit von Werbung aufweist.

35. Anwendungskommunikationsverfahren nach Anspruch 34,
wobei, wenn die Unteranwendung, für welche die gespeicherten Information in Bezug auf eine Anwesenheit/Abwesenheit von Werbung die Anwesenheit der Werbung anzeigt, gesendet wird, der Sendeschritt den Schritt des Sendens der Unteranwendung mit korrespondierenden Werbedaten angefügt aufweist.

36. Anwendungskommunikationsverfahren nach Anspruch 27,
wobei die vorgeschriebene Information einen Anwendungsnamen aufweist, welcher zu der Unteranwendung korrespondiert.

37. Anwendungskommunikationsverfahren nach Anspruch 25,
welches des Weiteren einen dritten Speicherschritt des Speicherns von Benutzerinformation aufweist.

38. Anwendungskommunikationsverfahren nach Anspruch 37,
wobei die Benutzerinformation eine Benutzer-ID und ein Passwort zur Identifikation eines Benutzers aufweist.

39. Anwendungskommunikationsverfahren nach Anspruch 38,
welches des Weiteren einen ersten Bestimmungsschritt aufweist des Bestimmens, wenn eine Benutzer-ID und ein Passwort im Empfangsschritt empfangen werden, ob die empfangene Benutzer-ID und das Passwort zur Benutzer-ID und zum Passwort passen, die im dritten Speicherschritt gespeichert wurden.

40. Anwendungskommunikationsverfahren nach Anspruch 39,
welches des Weiteren einen Hinderungsschritt aufweist des Verhinderns eines Sendevorgangs durch den Sendeschritt, wenn der erste Bestimmungsschritt bestimmt, dass die Benutzer-IDs und die Passwörter nicht passen.

41. Anwendungskommunikationsverfahren nach Anspruch 37,
wobei die Benutzerinformation eine Anwendungsverwendungsentwicklung aufweist.

42. Anwendungskommunikationsverfahren nach Anspruch 41,
welches des Weiteren aufweist:
einen Extraktionsschritt zum Extrahieren geeigneter Werbedaten, welche im ersten Speicherschritt gespeichert wurden, auf der Grundlage der gespeicherten Verwendungsentwicklung; und
einen Werbedatensendeschritt des Sendens der extrahierten Werbedaten.

43. Anwendungskommunikationsverfahren nach Anspruch 25,
wobei die Benutzerinformation Guthabeninformation eines Benutzers aufweist.

44. Anwendungskommunikationsverfahren nach Anspruch 25,
welches des Weiteren einen Belastungsschritt aufweist des Belastens eines Benutzers mit einem Preis der Unteranwendung, und zwar jedes Mal, wenn im Sendeschritt die Unteranwendung an den Benutzer gesendet wird.

45. Anwendungskommunikationsverfahren nach Anspruch 44,
welches des Weiteren einen Bestätigungsschritt aufweist des Bestätigens, ob ein Senden der Unteranwendung im Sendeschritt abgeschlossen ist,
wobei der Belastungsschritt einen Schritt des Belastens für die Unteranwendung aufweist, wenn ein Abschluss des Sendens durch den Bestätigungsschritt bestätigt ist.

46. Anwendungskommunikationsverfahren, welches durch das Endgerät nach Anspruch 22 ausführbar ist, mit:
einem Empfangsschritt des Empfangens einer Unteranwendung als Teil einer aufgeteilten Anwendung;
einem Ausführungsschritt des Ausführens der empfangenen Unteranwendung; und
einem Anforderungsschritt des Ausgebens einer Übersendungsanforderung für eine nächste Unteranwendung, und zwar gemäß einem Ausführungsergebnis des Ausführungsschritts,
**dadurch gekennzeichnet,**
**dass** die nächste Unteranwendung identifiziert wird auf der Grundlage von Information der als Nächstes zu verwendenden Unteranwendung, die in der empfangenen Unteranwendung gespeichert ist;
**dass**, wenn die Unteranwendung die letzte ist, diese durch die Information der als Nächstes zu verwendenden Unteranwendung als die letzte identifiziert wird.

47. Anwendungskommunikationsverfahren nach Anspruch 46,
welches des Weiteren einen Sendeschritt aufweist des Sendens eines Empfangsvollständigkeitssignals, wenn ein Empfangsvorgang der Unteranwendung im Empfangsschritt abgeschlossen ist.

48. Aufzeichnungsmedium,
welches ein Anwendungskommunikationsprogramm aufzeichnet, wobei das Anwendungskommunikationsprogramm eine Programmcodeeinrichtung aufweist zum Bewirken, dass ein Computer das Verfahren nach Anspruch 25 durchführt.

49. Anwendungskommunikationsprogramm mit einer Programmcodeeinrichtung zum Bewirken, dass ein Computer das Verfahren nach Anspruch 25 durchführt.

## Revendications

1. Dispositif serveur, comportant :
une première unité de stockage (121), destinée à stocker une application scindée en plusieurs sous-applications ;
une unité réceptrice (110) recevant des informations d'un utilisateur ; et
une unité émettrice (110) émettant au moins l'une desdites sous-applications en fonction desdites informations reçues, dans lequel :
au moins l'une desdites sous-applications est exécutable seule ;
lesdites sous-applications possèdent leur ordre d'exécution, et un objet de l'application, sous sa forme non scindée, est obtenu en exécutant lesdites sous-applications dans ledit ordre ;
ladite première unité de stockage (121) contient lesdites sous-applications en les associant à des identifiants (ID) pour leur identification ; **caractérisé en ce que** _{:}
ladite sous-application inclut l'identifiant de la sous-application qui doit être utilisée ensuite ; et
lorsque ladite unité réceptrice reçoit l'identifiant de ladite sous-application qui doit être utilisée ensuite, ladite unité émettrice émet, en se basant sur ledit identifiant reçu, la sous-application concernée stockée dans ladite première unité de stockage ; et
au moins l'une desdites sous-applications comporte un identifiant qui identifie que la sous-application concernée est la dernière.

2. Dispositif serveur selon la revendication 1, dans lequel ladite unité émettrice émet en premier lieu la sous-application qui est exécutable seule.

3. Dispositif serveur selon la revendication 1, comportant en outre une seconde unité de stockage (122), destinée à stocker des informations prescrites pour chacune desdites sous-applications.

4. Dispositif serveur selon la revendication 3, dans lequel lesdites informations prescrites comportent un identifiant de ladite sous-application et des informations de prix qui lui correspondent.

5. Dispositif serveur selon la revendication 4, dans lequel lesdites informations de prix correspondant à ladite sous-application, qui doit être émise en second lieu, ou ultérieurement, sont fixées à une valeur inférieure à ladite information de prix correspondant à ladite sous-application qui doit être émise en premier lieu.

6. Dispositif serveur selon la revendication 3, dans lequel lesdites informations prescrites comportent un nombre d'utilisations de ladite sous-application.

7. Dispositif serveur selon la revendication 6, comportant en outre une cinquième unité de stockage (120), destinée à stocker des informations concernant un taux de remise correspondant audit nombre d'utilisations.

8. Dispositif serveur selon la revendication 7, comportant en outre une unité de définition définissant un prix de la sous-application qui doit être transférée ensuite, en se basant sur le nombre d'utilisations de ladite sous-application prescrite qui est stockée dans ladite seconde unité de stockage (122) et le taux de remise correspondant au nombre d'utilisations concerné qui est stocké dans ladite cinquième unité de stockage (120).

9. Dispositif serveur selon la revendication 7, comportant en outre une unité de définition définissant un prix de la sous-application qui doit être transférée en second lieu, ou ultérieurement, en se basant sur le nombre d'utilisations de la sous-application qui doit être émise en premier lieu, et qui est stockée dans ladite seconde unité de stockage (122) et le taux de remise correspondant au nombre d'utilisations concerné qui est stocké dans ladite cinquième unité de stockage (120).

10. Dispositif serveur selon la revendication 3, dans lequel lesdites informations prescrites contiennent des informations concernant la présence/l'absence de publicité.

11. Dispositif serveur selon la revendication 10, dans lequel lorsque doit être émise la sous-application pour laquelle lesdites informations stockées concernant la présence/l'absence de publicité indiquent la présence de la publicité, ladite unité émettrice (110) émet la sous-application concernée en lui joignant des données de publicité correspondantes.

12. Dispositif serveur selon la revendication 3, dans lequel lesdites informations prescrites comportent un nom d'application correspondant à ladite sous-application.

13. Dispositif serveur selon la revendication 1, comportant en outre une troisième unité de stockage (123), destinée à stocker des informations d'utilisateur.

14. Dispositif serveur selon la revendication 13, dans lequel lesdites informations d'utilisateur comportent un identifiant et un mot de passe d'utilisateur pour assurer l'identification d'un utilisateur.

15. Dispositif serveur selon la revendication 14, comportant en outre une première unité de détermination (110) qui détermine, lorsque ladite unité réceptrice (110) reçoit un identifiant et un mot de passe d'utilisateur, si lesdits identifiant et mot de passe d'utilisateur reçus correspondent à l'identifiant et au mot de passe d'utilisateur stockés dans ladite troisième unité de stockage (123).

16. Dispositif serveur selon la revendication 15, comportant en outre une unité d'interdiction (110), qui interdit une opération d'émission de ladite unité émettrice lorsque ladite première unité de détermination (110) détermine que l'identifiant et le mot de passe d'utilisateur ne correspondent pas.

17. Dispositif serveur selon la revendication 13, dans lequel lesdites informations d'utilisateur comportent un historique d'utilisation d'application.

18. Dispositif serveur selon la revendication 17, comportant en outre :
une unité d'extraction, chargée d'extraire des données publicitaires appropriées, stockées dans ladite première unité de stockage (121) en se basant sur ledit historique d'utilisation stocké ; et
une unité d'émission de données publicitaires (110) qui émet lesdites données publicitaires extraites.

19. Dispositif serveur selon la revendication 13, dans lequel lesdites informations d'utilisateur comportent des informations de solde de crédit d'un utilisateur.

20. Dispositif serveur selon la revendication 1, comportant en outre une unité de facturation, qui facture à un utilisateur un prix pour ladite sous-application chaque fois que ladite unité émettrice (110) émet ladite sous-application vers l'utilisateur.

21. Dispositif serveur selon la revendication 20, comportant en outre une unité de confirmation, qui confirme si l'émission de ladite sous-application à partir de ladite unité émettrice (110) est effectuée,
dans lequel ladite unité de facturation (110) facture ladite sous-application lorsque ladite unité de confirmation confirme la fin de l'émission.

22. Dispositif terminal communiquant avec le dispositif serveur selon la revendication 1, comportant :
une unité réceptrice formant terminal (203) qui reçoit ladite sous-application dudit dispositif serveur ;
une unité d'exécution (203) qui exécute ladite sous-application reçue ; et
une unité de demande (203) qui demande l'émission d'une sous-application suivante en fonction d'un résultat d'exécution de ladite sous-application reçue par ladite unité d'exécution, **caractérisée en ce que** la sous-application suivante est identifiée en fonction d'informations concernant la sous-application qui doit être utilisée ensuite et qui sont stockées dans ladite sous-application reçue ;
si la sous-application est la dernière, elle est identifiée comme étant la dernière par les informations concernant la sous-application qui doit être utilisée ensuite.

23. Dispositif terminal selon la revendication 22, dans lequel lorsque des données publicitaires correspondant à ladite sous-application sont émises en même temps que ladite sous-application, ladite unité réceptrice formant terminal reçoit également les données publicitaires.

24. Dispositif terminal selon la revendication 22, comportant en outre une unité émettrice formant terminal (203) qui émet un signal de fin de réception lorsque ladite unité réceptrice formant terminal a terminé une opération de réception de ladite sous-application.

25. Procédé de communication d'application, comportant :
une première étape de stockage consistant à stocker une application scindée en plusieurs sous-applications ;
une étape de réception consistant à recevoir des informations d'un utilisateur ; et
une étape d'émission consistant à émettre au moins l'une desdites sous-applications en fonction desdites informations reçues, dans lequel :
au moins l'une desdites sous-applications est exécutable seule ;
lesdites sous-applications possèdent leur ordre d'exécution, et un objet de l'application, sous sa forme non scindée, est obtenu en exécutant lesdites sous-applications dans ledit ordre ;
ladite première étape de stockage comporte l'étape consistant à stocker lesdites sous-applications en les associant à des identifiants (ID) pour leur identification ; **caractérisé en ce que** :
lesdites sous-applications comportent chacune l'identifiant de la sous-application qui doit être utilisée ensuite ; et
ladite étape d'émission comporte l'étape consistant, lorsque l'identifiant de ladite sous-application qui doit être utilisée ensuite est reçu lors de ladite étape de réception, à émettre la sous-application concernée stockée au cours de ladite première étape de stockage en fonction dudit identifiant reçu ; et
au moins l'une desdites sous-applications comporte un identifiant indiquant que la sous-application concernée est la dernière.

26. Procédé de communication d'application selon la revendication 25, dans lequel ladite étape d'émission comporte l'étape consistant à émettre en premier lieu la sous-application exécutable seule.

27. Procédé de communication d'application selon la revendication 25, comportant en outre une seconde étape de stockage consistant à stocker des informations prescrites pour chacune desdites sous-applications.

28. Procédé de communication d'application selon la revendication 25, dans lequel lesdites informations prescrites comportent un identifiant de ladite sous-application et des informations de prix correspondantes.

29. Procédé de communication d'application selon la revendication 28, dans lequel lesdites informations de prix correspondant à ladite sous-application qui doit être émise en second lieu, ou ultérieurement, sont de valeur inférieure auxdites informations de prix correspondant à ladite sous-application qui doit être émise en premier lieu.

30. Procédé de communication d'application selon la revendication 27, dans lequel lesdites informations prescrites comportent un nombre d'utilisations de ladite sous-application.

31. Procédé de communication d'application selon la revendication 30, comportant en outre une cinquième étape de stockage destinée à stocker des informations concernant un taux de remise correspondant audit nombre d'utilisations.

32. Procédé de communication d'application selon la revendication 31, comportant en outre une étape de définition consistant à définir un prix de la sous-application qui doit être utilisée ensuite, en fonction du nombre d'utilisations de ladite sous-application prescrite qui est stocké lors de ladite seconde étape de stockage, et du taux de remise correspondant au nombre d'utilisations concerné qui est stocké lors de ladite cinquième étape de stockage.

33. Procédé de communication d'application selon la revendication 32, comportant en outre une étape de définition consistant à définir un prix de la sous-application qui doit être émise en second lieu, ou ultérieurement, en fonction du nombre d'utilisations de la sous-application qui doit être envoyée en premier lieu et qui est stockée lors de ladite seconde étape de stockage, et du taux de remise correspondant au nombre d'utilisations concerné qui est stocké lors de ladite cinquième étape de stockage.

34. Procédé de communication d'application selon la revendication 27, dans lequel lesdites informations prescrites comportent des informations concernant la présence/l'absence de publicité.

35. Procédé de communication d'application selon la revendication 34, dans lequel lorsque doit être émise la sous-application pour laquelle lesdites informations stockées concernant la présence/l'absence de publicité indiquent la présence de la publicité, ladite étape d'émission comporte l'étape consistant à émettre ladite sous-application en lui joignant des données publicitaires correspondantes.

36. Procédé de communication d'application selon la revendication 27, dans lequel lesdites informations prescrites comportent un nom d'application correspondant à ladite sous-application.

37. Procédé de communication d'application selon la revendication 25, comportant en outre une troisième étape de stockage consistant à stocker des informations d'utilisateur.

38. Procédé de communication d'application selon la revendication 37, dans lequel lesdites informations d'utilisateur comportent un identifiant et un mot de passe d'utilisateur pour l'identification d'un utilisateur.

39. Procédé de communication d'application selon la revendication 38, comportant en outre une première étape de détermination consistant à déterminer, à réception de l'identifiant du mot de passe d'utilisateur lors de ladite étape de réception, si lesdits identifiant et mot de passe d'utilisateur reçus correspondent à l'identifiant et au mot de passe d'utilisateur stockés lors de ladite troisième étape de stockage.

40. Procédé de communication d'application selon la revendication 39, comportant en outre une étape d'interdiction consistant à interdire une opération d'émission lors de ladite étape d'émission lorsque ladite première étape de détermination détermine que l'identifiant et le mot de passe d'utilisateur ne correspondent pas.

41. Procédé de communication d'application selon la revendication 37, dans lequel lesdites informations d'utilisateur comportent un historique d'utilisation d'application.

42. Procédé de communication d'application selon la revendication 41, comportant en outre :
une étape d'extraction consistant à extraire, en fonction dudit historique d'utilisation stocké, des données publicitaires appropriées stockées lors de ladite première étape de stockage ; et
une étape d'émission de données publicitaires consistant à émettre lesdites données publicitaires extraites.

43. Procédé de communication d'application selon la revendication 25, dans lequel lesdites informations d'utilisateur comportent des informations de solde de crédit d'un utilisateur.

44. Procédé de communication d'application selon la revendication 25, comportant en outre une étape de facturation consistant à facturer un utilisateur pour un prix d'une dite sous-application chaque fois que ladite sous-application est émise vers l'utilisateur lors de ladite étape d'émission.

45. Procédé de communication d'application selon la revendication 44, comportant en outre une étape de confirmation consistant à confirmer si l'émission de ladite sous-application a été effectuée lors de ladite étape d'émission,
dans lequel ladite étape de facturation comporte l'étape consistant à facturer ladite sous-application lorsque la fin de l'émission est confirmée lors de ladite étape de confirmation.

46. Procédé de communication d'application exécutable par le dispositif terminal, selon la revendication 22, comprenant :
une étape de réception consistant à recevoir une sous-application constituant une partie d'une application scindée ;
une étape d'exécution consistant à exécuter ladite sous-application reçue ; et
une étape de demande consistant à émettre une demande d'émission d'une sous-application suivante en fonction d'un résultat d'une exécution lors de ladite étape d'exécution, **caractérisé en ce que** la sous-application suivante est identifiée en fonction d'informations concernant la sous-application qui doit être utilisée ensuite et qui sont stockées dans ladite sous-application reçue ;
si la sous-application est la dernière, elle est identifiée comme la dernière par les informations de la sous-application qui doit être utilisée ensuite.

47. Procédé de communication d'application selon la revendication 46, comportant en outre une étape d'émission consistant à émettre un signal de fin de réception lorsqu'une opération de réception de la sous-application a été effectuée lors de ladite étape de réception.

48. Support d'enregistrement destiné à enregistrer un programme de communication d'application, le programme de communication d'application comportant un moyen de code de programme destiné à provoquer la mise en oeuvre par un ordinateur du procédé selon la revendication 25.

49. Programme de communication d'application comportant un moyen de code de programme destiné à provoquer la mise en oeuvre par un ordinateur du procédé selon la revendication 25.
